# EUROPEAN PATENT APPLICATION

(11) **EP 4 783 534 A1**
(43) Date of publication of application: **29.07.2026**
(21) Application number: 23952575.1
(22) Date of filing: 20.09.2023
(51) Int. Cl.: H04L 43/0817

(54) **MODEL MONITORING METHODS AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: WU, Hao, Dongguan, Guangdong 523860 (CN)
(74) Representative: Taor, Simon Edward William
(86) International application number: PCT/CN2023/120049
(87) International publication number: WO 2025/059914

(57) **Abstract**

Provided are model monitoring methods and communication devices. A method comprises: a first device performs objective model monitoring on a first model, the objective model monitoring comprising one of the following: periodic model monitoring, event-triggered model monitoring, second device instruction-triggered model monitoring, and predicted data-based model monitoring, and the predicted data being predicted on the basis of measured data. In the embodiments of the present application, compared with those among traditional solutions in which model monitoring is continuously carried out on models, introducing the objective model monitoring to perform model monitoring on the model (also referred to as the first model) helps to improve the rationality of executing model monitoring during actual processes.

## Description

### TECHNICAL FIELD

The present application relates to the field of communication technologies, and more particularly, to a method of model monitoring and a communication device.

### BACKGROUND

With wide application of models in a communication system, performances of the models affect communication quality of the communication system. For a model with better performance, communication based on this model can greatly improve the communication quality. For a model with poor performance, communication based on this model may lead to degradation of the communication quality and even communication failure. Therefore, it is very important to monitor the performance of the model. At present, a scheme of continuous model monitoring of model performance is mainly used for model monitoring, which may lead to an unreasonable implementation of model monitoring in an actual process.

### SUMMARY

The present application provides a method of model monitoring and a communication device. Various aspects of the present application are described below.

In a first aspect, there is provided a method of model monitoring. The method includes an operation that a first device performs target model monitoring on a first model, the target model monitoring includes one of: model monitoring based on a period; model monitoring triggered based on an event; model monitoring triggered based on an indication from a second device; or model monitoring based on prediction data, the prediction data is obtained by performing prediction based on measurement data.

In a second aspect, there is provided a method of model monitoring. The method includes an operation that a second device transmits first information to a first device. The first information is used for performing target model monitoring on a first model. The target model monitoring includes one of: model monitoring based on a period; model monitoring triggered based on an event; model monitoring triggered based on an indication from a second device; or model monitoring based on prediction data, the prediction data is obtained by performing prediction based on measurement data.

In a third aspect, there is provided a communication device, the communication device is a first device, which includes: a processing unit, configured to perform target model monitoring on a first model, the target model monitoring includes one of: model monitoring based on a period; model monitoring triggered based on an event; model monitoring triggered based on an indication from a second device; or model monitoring based on prediction data, the prediction data is obtained by performing prediction based on measurement data.

According to a fourth aspect, there is provided a communication device, the communication device is a second device, which includes: a transmission unit, configured to transmit first information to the first device. The first information is used for performing target model monitoring on a first model. The target model monitoring includes one of: model monitoring based on a period; model monitoring triggered based on an event; model monitoring triggered based on an indication from a second device; or model monitoring based on prediction data, the prediction data is obtained by performing prediction based on measurement data.

In a fifth aspect, there is provided a communication device, which includes a processor, a memory for storing one or more computer programs and a communication interface. The processor is configured to invoke the computer programs in the memory to cause the communication device to perform some or all of the operations in the methods of the above aspects.

According to a sixth aspect, an embodiment of the present application provides a communication system, which includes the above-described first device and/or second device. In another possible design, the system may further include other devices that interact with the first device and/or the second device in the scheme provided by the embodiments of the present application.

In a seventh aspect, an embodiment of the present application provides a computer-readable storage medium storing a computer program that causes a communication device (e.g., a first device or a second device) to perform some or all of the operations in the methods of the above aspects.

In an eighth aspect, an embodiment of the present application provides a computer program product. The computer program product includes a non-transitory computer-readable storage medium storing a computer program operable to cause a communication device (e.g., a first device and/or a second device) to perform some or all of the operations in the methods of the various aspects described above. In some implementations, the computer program product may be a software installation package.

In a ninth aspect, an embodiment of the present application provides a chip, which includes a memory and a processor. The processor can invoke and run a computer program from the memory to implement some or all of the operations described in the methods of the above aspects.

In the embodiments of the present application, by introducing the target model monitoring, the model monitoring is performed on the model (also referred to as the first model), which is helpful to improve the rationality of the execution of the model monitoring in the actual process compared with the scheme of continuously monitoring the model in the traditional scheme.

### BRIEF DESCRIPTION OF THE DRAWINGS

FIG. 1 shows a wireless communication system 100 to which an embodiment of the present application is applied.
FIG. 2 is a schematic diagram of channel estimation and signal recovery applicable to an embodiment of the present application.
FIG. 3 is a schematic diagram of a Channel-State Information (CSI) feedback system based on an Artificial Intelligence (AI) model applicable to an embodiment of the present application.
FIG. 4 is a schematic diagram showing a positioning scheme based on an AI model applicable to an embodiment of the present application.
FIG. 5 is a schematic diagram of beam management based on an AI model applicable to an embodiment of the present application.
FIG. 6 is a schematic diagram of a neural network applicable to an embodiment of the present application.
FIG. 7 is a schematic diagram of a Convolutional Neural Network (CNN) applicable to an embodiment of the present application.
FIG. 8 is a flowchart of a method of model monitoring triggered by a network device applicable to an embodiment of the present application.
FIG. 9 is a flowchart of a method of model monitoring triggered by a terminal device applicable to an embodiment of the present application.
FIG. 10 is a flowchart of a method of model monitoring triggered by an event applicable to an embodiment of the present application.
FIG. 11 is a flowchart of a method of performing model monitoring on a terminal-side model applicable to an embodiment of the present application.
FIG. 12 is a flowchart of a method of model monitoring according to an embodiment of the present application.
FIG. 13 is a schematic diagram of a model monitoring scheme based on a period according to an embodiment of the present application.
FIG. 14 is a schematic diagram of a model monitoring scheme based on a period according to a first timer in an embodiment of the present application.
FIG. 15 is a schematic diagram of a communication device according to an embodiment of the present application.
FIG. 16 is a schematic diagram of a communication device according to another embodiment of the present application.
FIG. 17 is a schematic structural diagram of a communication apparatus according to an embodiment of the present application.

### DETAILED DESCRIPTION

Hereinafter, technical solutions in the present application will be described with reference to the accompanying drawings.

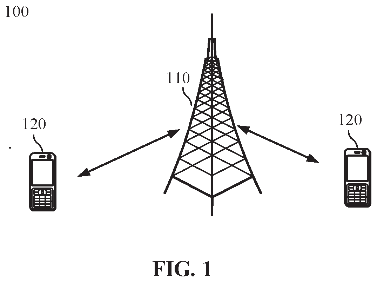

FIG. 1 shows a wireless communication system 100 to which an embodiment of the present application is applied. The wireless communication system 100 may include a network device 110 and terminal devices 120. The network device 110 may be a device in communication with the terminal devices 120. The network device 110 may provide communication coverage for a particular geographic area and may communicate with the terminal devices 120 located within the coverage area.

FIG. 1 exemplarily illustrates one network device and two terminals. Alternatively, the wireless communication system 100 may include a plurality of network devices and another number of terminal devices may be included within the coverage range of each network device, which is not limited by the embodiments of the present application.

Optionally, the wireless communication system 100 may further include other network entities such as a network controller and a mobility management entity, and the embodiments of the present application are not limited thereto.

It should be understood that the technical solutions of the embodiments of the present application can be applied to various communication systems, such as a fifth generation (5G) system or a new radio (NR) system, a long term evolution (LTE) system, an LTE frequency division duplex (FDD) system, an LTE time division duplex (TDD), and the like. The technical solution provided in the present application can also be applied to future communication systems, such as a sixth generation mobile communication system, a satellite communication system, and the like.

The terminal device in the embodiments of the present application may also be referred to as a User Equipment (UE), an access terminal, a subscriber unit, a subscriber station, a mobile site, a Mobile Station (MS), a Mobile Terminal (MT), a remote station, a remote terminal, a mobile device, a user terminal, a terminal, a wireless communication device, a user agent, or a user device. The terminal device in the embodiments of the present application may be a device that provides voice and/or data connectivity to a user, and may be used to connect people, objects, and machines, for example, a handheld device, a vehicle-mounted device, or the like which have a wireless connection function. The terminal device in the embodiments of the present application may be a mobile phone, a pad, a laptop computer, a handheld computer, a Mobile Internet Device (MID), a wearable device, a Virtual Reality (VR) device, a Augmented Reality (AR) device, a wireless terminal in an industrial control, a wireless terminal in an industrial control, a wireless terminal in self driving, a wireless terminal in a remote medical surgery, a wireless terminal in a smart grid, a wireless terminal in transportation safety, a wireless terminal in a smart city, a wireless terminal in a smart home, or the like. Alternatively, the UE may be used to act as a base station. For example, a UE may act as a scheduling entity that provides sidelink signals between UEs in V2X or D2D, etc. For example, cellular telephones and automobiles communicate with each other using sidelink signals. Cellular phone communicates with smart home devices without relaying communication signals through base stations.

The network device in the embodiments of the present application may be a device for communicating with a terminal device. The network device may also be referred to as an access network device or a radio access network device. For example, the network device may be a base station. The network device in the embodiments of the present application may refer to a Radio Access Network (RAN) node (or device) that connects the terminal device to the wireless network. The base station may generally cover or be replaced with various names such as, a NodeB, an evolved NodeB (eNB), a next generation NodeB (gNB), a relay station, an access point, a Transmitting and Receiving Point (TRP), a Transmitting Point (TP), a master evolved NodeB (MeNB), a secondary evolved NodeB (SeNB), an MSR node, a home base station, a network controller, an access node, a wireless node, an access point, a transmission node, a transmitting/receiving node, a Base Band Unit (BBU), a Remote Radio Unit (RRU), an Active Antenna Unit (AAU), an Remote Radio Head (RRH), a Central Unit (CU), a Distributed Unit (DU), a location node, and the like. The base station may be a macro base station, a micro base station, a relay node, a donor node, or the like, or a combination thereof. The base station may also refer to a communication module, modem, or chip for disposal within the aforementioned devices or apparatus. The base station may also be a mobile switching center, a device that assumes a base station function in a device-to-device (D2D), a vehicle-to-everything (V2X), a machine-to-machine (M2M) communication, a network-side device in a 6G network, a device that assumes a base station function in a future communication system, or the like. The base stations may support networks of the same or different access technologies. The embodiments of the present application do not limit the specific technology and the specific device form adopted by the network device.

The base station may be fixed or mobile. For example, a helicopter or drone may be configured to act as a mobile base station, and one or more cells may move according to the location of the mobile base station. In other examples, a helicopter or drone may be configured as a device to communicate with another base station.

In some deployments, the network device in the embodiments of the present application may refer to a CU or a DU, or the network device includes a CU and a DU. The gNB may also include an AAU.

Network devices and terminal devices can be deployed on land, including indoor or outdoor, handheld or vehicle-mounted, or may also be deployed on the water, or may also be deployed on aircraft, balloons and satellites in the air. In the embodiments of the present application, the scenario in which the network devices and the terminal devices are located is not limited.

It should be understood that all or part of the functionality of the communication device in the present application may also be implemented by software functionality running on hardware, or by virtualization functionality instantiated on a platform, such as a cloud platform.

### Channel Estimation and Signal Recovery Based on AI Model

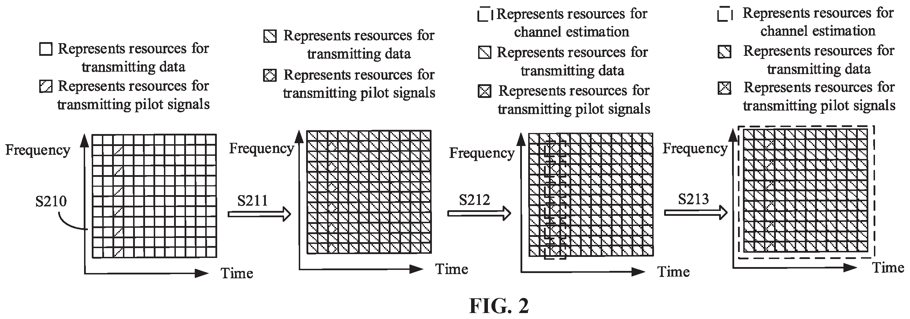

Due to the complexity and time-varying nature of the wireless channel environment, in a wireless communication system (e.g., the wireless communication system introduced above), the receiver needs to recover a received signal based on an estimation of a channel. FIG. 2 is a schematic diagram of channel estimation and signal recovery applicable to an embodiment of the present application.

As shown in FIG. 2, in operation S210, a transmitter transmits a series of pilot signals known to a receiver, such as a Channel State Information-Reference Signal (CSI-RS), a Demodulation Reference Signal (DMRS), and the like, in addition to a data signal, on time-frequency resources.

In operation S211, the transmitter transmits the data signal and the pilot signal as described above to the transmitter through a channel.

In operation S212, the receiver may perform channel estimation after receiving the pilot signal. In one possible implementation, the receiver may estimate channel information of the channel on which the pilot signal is transmitted based on a pre-stored pilot sequence and the received pilot sequence through a channel estimation algorithm (e.g., least squares method (LS) channel estimation).

In operation S213, the receiver may recover the channel information on the full time frequency resources by using an interpolation algorithm according to the channel information of the channel on which the pilot sequence is transmitted, and use it for subsequent Channel State Information (CSI) feedback, data recovery, and the like.

### CSI feedback system based on AI model

In a wireless communication system, a codebook-based scheme is mainly used to realize extraction and feedback of channel features. That is, after estimating a channel, a receiver selects a precoding matrix that best matches the current channel from preset precoding codebooks based on some optimization criterion according to results of the channel estimation, and feeds back information of a precoding matrix index (PMI) to the transmitter through a feedback link of an air interface for the transmitter to realize precoding. In some implementations, the receiver may also feed back the measured Channel Quality Indication (CQI) to the transmitter for the transmitter to implement adaptive modulation coding, etc.

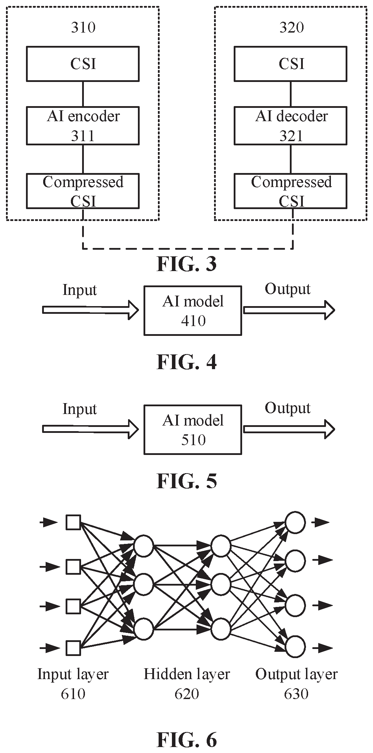

FIG. 3 is a schematic diagram of a CSI feedback system based on an AI model applicable to an embodiment of the present application. As shown in FIG. 3, the entire feedback system includes an AI encoder 311 as a self-encoder and an AI decoder 321 part. Herein, the AI encoder 311 is deployed at a transmitter 310 and the AI decoder 321 is deployed at a receiver 320. The transmitter 310 compresses and encodes CSI to be transmitted through the AI encoder 311 to obtain the compressed CSI. Then, the transmitter 310 feeds back the compressed CSI to the receiver 320 through a feedback link. The receiver 320 decodes the compressed CSI through the AI decoder 321 to obtain the recovered CSI. Thus, the communication overhead for feeding back the CSI can be saved without affecting the accuracy of CSI transmission.

### Positioning based on AI model

In cellular wireless positioning, straight line propagation of electromagnetic waves between a network device and a terminal device is called line of sight (LOS) wireless propagation. In some cases, electromagnetic wave signals cannot propagate in a straight line due to blocking of buildings or trees, which is often called non line of sight (NLOS) wireless propagation. Traditional positioning algorithms such as time difference of arrival (TDOA) and angle-of-arrival (AOA) are based on LOS channels and are no longer applicable in NLOS-dominated environments. In most scenarios, the number of network devices having LOS channels with terminal devices is often small, resulting in the accuracy of traditional positioning algorithms failing to meet the requirements of high-precision positioning. In addition, there may be some non-ideal factors in an actual system, which will lead to the reduction of positioning accuracy.

Therefore, high-precision positioning in LOS/NLOS channel coexistence scenarios based on AI model is proposed. Some existing research results show that: by training a model based on a large amount of channel data using machine learning methods to mine a mapping relationship between channel responses and position coordinates, a problem that traditional positioning algorithms cannot be applied in the LOS/NLOS channel coexistence scenarios can be solved, and the positioning accuracy is improved.

FIG. 4 is a schematic diagram showing a positioning scheme based on an AI model applicable to an embodiment of the present application. Referring to FIG. 4, in a scheme in which positioning in LOS/NLOS channel coexistence scenarios is implemented based on an AI model 410, a channel response may be used as an input of the AI model 410, and a position coordinate may be used as an output of the AI model 410. An internal relationship between a wireless channel and a position of a terminal device is learned by using the AI model 410. In such a way, even in a scenario in which there are not enough LOS channels and/or in a scenario in which non-ideal conditions exist, the positioning scheme based on the AI model 410 can output the position coordinates of the terminal device with higher precision, which is helpful to meet the demand for high-precision positioning.

Several communication processes to which the AI model is applicable have been described above, and AI models applicable to the embodiments of the present application are described below. It should be noted that the AI models applicable to the embodiments of the present application are not limited to the AI models described below.

### Beam management based on AI model

In a traditional beam selection process, it is usually necessary to traverse all combinations of receiving beams and transmitting beams in order to select an appropriate beam. However, the time required to traverse all combinations is longer, resulting in less efficient beam selection.

For example, it is assumed that a network device deploys 64 different downlink transmission directions (carried through up to 64 synchronization signal and physical broadcast channel blocks (SSBs)) at FR2. Accordingly, a terminal device uses one or more antenna panels to simultaneously perform receiving beam scanning when receiving, and each antenna panel has 4 receiving beams. Then the terminal device needs to measure at least 256 beam pairs, that is, the downlink resource overhead of 256 resources is required. From a view of time, each SSB period is about 20 ms, and it takes 4 SSB periods to complete measurement of 4 received beams. It is assumed that multiple receiving antenna panels can perform beam scanning simultaneously, it takes at least 80 ms.

With an increase in the number of beams in future large-scale multiple-in multiple-out (MIMO) systems, in order to match an optimal beam pair, using a beam management scheme based on beam sweep will only bring greater reference signal transmission overhead and beam sweep delay. Therefore, to avoid the above problems, beam management based on AI model is proposed in R18. Hereinafter, the beam management solution based on the AI model is introduced based on a training process and prediction process for an AI model respectively.

It is assumed that an AI model is used to predict an available beam from a beam set A. Accordingly, in a training phase, a beam measurement result of a beam set B may be used as training data for the AI model. That is, the AI model may be trained based on the beam measurement result of the beam set B so that the AI model can predict the available beam from the beam set A.

It should be noted that the beam measurement result of the beam set B may include a measurement result corresponding to a layer 1 (L1) measurement value and/or indication information of a selected beam in the beam set B (for example, a transmitting beam identifier, a receiving beam identifier, a beam pair identifier, or the like).

In some implementations, the training data may further include label information of the beam set A. The label information indicates one or more of the following beams in the beam set A: an optimal transmitting beam, an optimal receiving beam, an optimal beam pair, a plurality of better transmitting beams, a plurality of better receiving beams, a better beam pair, and the like.

Referring to FIG. 5, in a prediction phase, an input of a AI model 510 may include a link quality measurement result (e.g., an L1 measurement value) corresponding to a beam in the beam set A, and a prediction result output by the AI model 510 may include a target beam selected from the beam set A, and a link quality corresponding to the target beam.

In some implementations, the target beam described above may be one or more beams. Taking the target beam as one beam as an example, the target beam may be an optimal beam or a better beam in the beam set A. Taking the target beam as a plurality of beams as an example, the target beam may be a plurality of beams in the beam set A that meet an requirement, where meeting the requirement can be understood as meaning that a link quality corresponding to the beam meets the requirement, for example, the link quality corresponding to the beam is greater than or equal to a threshold.

In other implementations, the target beam described above may refer to one or more beam pairs. Each beam pair may include a receiving beam or a transmitting beam. Taking the target beam as a beam pair as an example, the target beam may be an optimal beam pair or a better beam pair in the beam set A. Taking the target beam as a plurality of beam pairs as an example, the target beam may be a plurality of beam pairs that meet an requirement in the beam set A, where meeting the requirement can be understood as meaning that a link quality corresponding to the beam pair meets the requirement, for example, the link quality corresponding to the beam pair is greater than or equal to a threshold.

It should be noted that the link quality in the embodiments of the present application can be determined through one or more measurement values described above. Or, the link quality in the embodiments of the present application may also be determined based on other measurement values in the future communication system, and the embodiments of the present application are not limited thereto.

In addition, the above-described link quality is determined based on one or more measurement values, which can be understood as that the link quality is obtained by processing the one or more measurement values, or, the link quality may also be a measurement value. The embodiments of the present application are not limited thereto.

It should also be noted that, if the prediction result indicates only one beam in the beam pair, the other beam in the beam pair may be determined through another method, for example, it may be determined through one or some procedures of P1 to P3 in the conventional beam selection process, or it may be determined by one or some procedures of U1 to U3 in the conventional beam selection process, and this is not limited in the embodiments of the present application.

In some implementations, the beam set B described above may be a beam set different from the beam set A. In some implementations, the beam set B may be a subset of the beam set A. Accordingly, by measuring fewer beams (beams in beam set B), prediction for more beams (beams in beam set A) may be achieved. Compared to the above-described scheme of beam selection based on traversing all combinations, it is helpful to reduce the time of performing the beam selection procedure. Of course, in the embodiments of the present application, the beam in the beam set B and the beam in the beam set A may be completely different beams. For example, there is no intersection between the beam set B and the beam set A, but beam directions corresponding to the beam set B may be similar to beam directions corresponding to the beam set A.

In other implementations, the above-described beam set B may be exactly the same beam set as the beam set A.

The communication process to which the AI model is applicable is described above in conjunction with FIGs 2 to 5. The embodiments of the present application do not limit thereto, and the AI model may also be applied to other communication procedures specified in future communication protocols. For example, the AI model may also be used for selection of a target cell in cell handover. For another example, the AI model may also be used for selection of a target cell in a cell reselection procedure. As another example, the AI model may also be used to predict communication link failure. As another example, the AI model may also be used to recover a communication link. Hereinafter, an AI model to which the embodiments of the present application are applicable will be described with reference to FIGs. 6 to 7.

### AI model

In recent years, research on the artificial intelligence represented by the neural network has achieved significant breakthroughs in numerous fields, and it will also play an important role in people's production and life for a long time to come. The neural network can be understood as an operation model composed of multiple neuron nodes connected to each other, in which the connection between nodes can represent the weighted value from the input signal to the output signal, usually called weight. Each node performs a weighted summation of different input signals and outputs them through a specific activation function.

Common neural networks include CNN, recurrent neural network (RNN), deep neural network (DNN), etc.

Hereinafter, a neural network to which the embodiments of the present application are applicable will be described with reference to FIG. 6. The neural network shown in FIG. 6 can be divided into three categories according to the locations of different layers: an input layer 610, a hidden layer 620, and an output layer 630. Generally, the first layer is the input layer 610, the last layer is the output layer 630, and the intermediate layers between the first layer and the last layer are hidden layers 620.

The input layer 610 is used for input data, which may be, for example, a received signal received by a receiver. The hidden layer 620 is used to process the input data, for example, to decompress the received signal. The output layer 630 outputs processed output data, for example, outputs a decompressed signal.

As shown in FIG. 6, the neural network includes a plurality of layers, each layer includes a plurality of neurons, and the neurons between the layers may be fully connected or partially connected. For connected neurons, the output of the neuron of the upper layer can be used as the input of the neuron of the next layer.

With the continuous development of neural network research, neural network deep learning algorithms have been proposed in recent years, introducing more hidden layers into neural networks to form DNN. More hidden layers allow DNN to better describe complex situations in the real world. Theoretically, the more parameters a model has, the higher the complexity and the greater the "capacity", which means that it can complete more complex learning tasks. This neural network model is widely used in pattern recognition, signal processing, optimization combination, anomaly detection and so on.

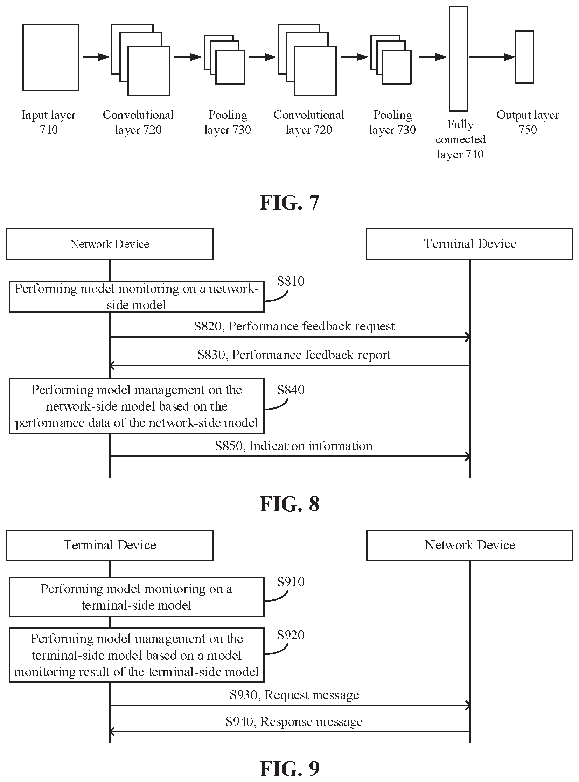

A CNN is a deep neural network with a convolutional structure, the structure of which is shown in FIG. 7, and may include an input layer 710, a convolutional layer 720, a pooling layer 730, a fully connected layer 740, and an output layer 750.

Each convolution layer 720 may include a plurality of convolution operators, also referred to as kernels, which may function as a filter for extracting specific information from an input signal. The convolution operator may essentially be a weight matrix, which is typically predefined.

Weight values in these weight matrices may be obtained through a lot of training in practical applications. Each weight matrix formed by the trained weight values can extract information from the input signal, thus helping CNN to make correct predictions.

When CNN has multiple convolutional layers, the initial convolutional layer often extracts more general features, which can also be called low-level features. As the depth of CNN increases, the features extracted from subsequent convolutional layers become more and more complex.

In the pooling layer 730, since it is often necessary to reduce the number of training parameters, it is often necessary to periodically introduce a pooling layer after a convolutional layer. For example, it may be one convolutional layer followed by one pooling layer as shown in FIG. 7, or it may be a plurality of convolutional layers followed by one or more pooling layers. In the process of signal processing, the sole purpose of the pooling layer is to reduce the space size of the extracted information.

In the fully connected layer 740, after the processing of the convolutional layer 720 and the pooling layer 730, the CNN is not sufficient to output the required output information. As described earlier, the convolutional layer 720 and the pooling layer 730 will only extract features and reduce parameters brought by the input data. However, in order to generate the final output information (e.g., a bitstream of raw information transmitted by the transmitter), the CNN also needs to utilize the fully connected layer 740. Generally, the fully connected layer 740 may include a plurality of hidden layers, and the parameters included in the multi-layer hidden layers may be obtained by performing training in advance according to relevant training data for a specific task type, for example, the task type may include decoding data signals received by the receiver, or for example, the task type may further include channel estimation based on pilot signals received by the receiver.

After the multiple hidden layers in the fully connected layer 740, that is, the last layer of the entire CNN is an output layer 750 for outputting results. Typically, the output layer 750 is provided with a loss function (e.g., a loss function similar to classification cross entropy) for calculating a prediction error or for evaluating the degree of difference between a result output by the CNN model (also known as a predicted value) and an ideal result (also known as a true value).

In order to minimize the loss function, the CNN model needs to be trained. In some implementations, the CNN model may be trained using a Backpropagation Algorithm (BP). The training process of BP consists of a forward propagation process and a back propagation process. In the process of forward propagation (as shown in FIG 7, the propagation from 710 to 750 is forward propagation), the input data is input into the above layers of the CNN model, processed layer by layer, and transmitted to the output layer. If the output result at the output layer is quite different from the ideal result, the minimization of the above loss function is taken as the optimization objective, and it is transferred to back propagation (as shown in FIG 7, the propagation from 750 to 710 is back propagation), and the partial derivative of the optimization objective to the weight of each neuron is obtained layer by layer to form the gradient of the optimization objective to the weight vector, which is used as the basis for modifying the model weight. The training process of CNN is completed in the weight modification process. When the above error reaches the expected value, the training process of CNN ends.

It should be noted that the CNN shown in FIG. 7 is only an example of a convolutional neural network. In a specific application, the convolutional neural network may also exist in the form of other network models, and the embodiments of the present application do not limit this.

The purpose of RNNs is to process sequence data. In the traditional neural network model (for example, in the CNN model), from the input layer to the hidden layer to the output layer, the layers are fully connected, and the nodes between each layer are unconnected. But this ordinary neural network is powerless for many problems. For example, if you want to predict what the next word in a sentence will be, you usually need to use the previous word, because the words before and after in a sentence are not independent. The reason why RNNs are called recurrent neural networks is that the current output of a sequence is also related to the previous output. The specific manifestation is that the network will memorize the previous information and apply it to the calculation of the current output, that is, the nodes between the hidden layers are no longer unconnected but connected, and the input of the hidden layer includes not only the output of the input layer but also the output of the hidden layer at the previous moment. Theoretically, RNNs are capable of processing sequence data with any length.

The training of RNN is the same as the training of traditional ANN (artificial neural network). The BP error back propagation algorithm is also used, but there is a difference. If the RNNs are network expanded, the parameters W, U, V are shared, but traditional neural networks are not. And in using the gradient descent algorithm, the output of each step depends not only on the network of the current step, but also on the state of the network of the previous steps. For example, when t = 4, three more steps need to be passed backwards, and various gradients need to be added to the next three steps. This learning algorithm is called Back Propagation Through Time (BPTT).

Given that we already have artificial neural networks and convolutional neural networks, why do we need recurrent neural networks? The reason is very simple. Whether it is a convolutional neural network or an artificial neural network, their premise is that the elements are independent of each other, and the input and output are also independent, such as cats and dogs. But in the real world, many elements are interconnected, such as the change of stocks over time. One person said: I like traveling, and my favorite place is Yunnan. I must go () when I have the opportunity in the future. Fill in the bracket here. Everyone should know that it is "Yunnan". Because we infer it based on the content of the context, it is quite difficult for a machine to do this. Therefore, there is the current recurrent neural network, whose essence is to have the ability to remember like a human. Therefore, his output depends on the current input and memory.

### Model Monitoring

Model monitoring, also known as "model surveillance", is used to monitor the model inference process of the model, or in other words, to monitor the model inference performance of the model. Model monitoring can be used to detect the accuracy, stability, robustness and efficiency of the model to ensure the reliability and effectiveness of the model in practical applications. At present, the model monitoring process mainly serves the processes of model activation, model selection, model switching, model fallback, model update (including retraining), etc. Herein, model fallback can be understood as fallback from model-based communication methods to traditional communication methods (i.e. it is not model-based communication method).

In some implementations, the model may be deployed in a variety of ways. For example, the model may be deployed on the UE side, and at this time, the model is also referred to as a "UE-side model" or a "terminal-side model". For another example, the model may be deployed on the network side, and at this time, the model is also referred to as a "network-side model". For another example, a model may be deployed on devices at both ends of a communication link (e.g., a terminal device and a network device, or, for example, a terminal device and a terminal device), and at this time, the model is also referred to as a "two-sided model".

In some implementations, different model monitoring trigger methods may correspond to models with different deployment methods. The model monitoring trigger methods corresponding to different deployment methods are described below in conjunction with FIGs 8 to 10. It should be understood that in the embodiments of the present application, the correspondence relationship between the model deployment modes and the model monitoring triggering modes is not limited. The following description is by way of example only.

FIG. 8 is a flowchart of a method of model monitoring triggered by a network device applicable to an embodiment of the present application. Assuming that the model for which the model monitoring to be performed is a network-side model, the method illustrated in FIG. 8 includes operations S810 to S840.

In operation S810, a network device triggers model monitoring of a network-side model.

In operation S820, the network device transmits a performance feedback request to a terminal device to request the terminal device to feed back performance data of the network side model obtained by measurement.

In operation S830, the terminal device transmits the performance feedback report to the network device to carry the performance data of the network side model.

In operation S840, the network device performs model management on the network-side model based on the performance data of the network-side model.

In some implementations, the model management may include one or more of the following: controlling the network-side model to be in an active state; controlling the network side model to be in an inactive state; controlling the network-side model to perform model fallback; performing a model selection process; or performong a model switching process.

In operation S850, the network device transmits indication information for indicating the model management result of the model management to the terminal device.

Taking the model management including controlling the network-side model to be in the active state as an example, the model management result includes that the network-side model is in the active state. Taking the model management including controlling the network-side model to be in the inactive state as an example, the model management result includes the network-side model to be in the inactive state. Taking the model management including controlling the network-side model to perform the model fallback as an example, the model management result includes whether the network-side model executes the model fallback successfully. Taking the model management including performing the model selection process as an example, the model management result includes the target model selected through the model selection process. Taking the model management including performing the model switching process as an example, the model management result includes a target model switched to through the model switching process.

FIG. 9 is a flowchart of a method of model monitoring triggered by a terminal device applicable to an embodiment of the present application. Assuming that a model for which the model monitoring is to be performed is a terminal-side model, the method illustrated in FIG. 9 includes operations S910 to S940.

In operation S910, a terminal device triggers model monitoring of a terminal-side model.

In operation S920, the terminal device performs model management on the terminal-side model based on a model monitoring result of the terminal-side model.

In some implementations, the model management includes one of: controlling the network-side model to be in an active state; controlling the network side model to be in an inactive state; controlling the network-side model to perform model fallback; performing a model selection process; or performing a model switching process.

In operation S930, the terminal device transmits a request message to the network device to request a model management result that allows the model management.

Taking the model management including controlling the network-side model to be in the active state as an example, the request message is used to request that the network-side model is allowed to be in the active state. Taking the model management including controlling the network-side model to be in the inactive state as an example, the request message is used to request that the network-side model is allowed to be in the inactive state. Taking the model management including controlling the network-side model to perform the model fallback as an example, the request message is used to request that the network-side model is allowed to perform the model fallback. Taking the model management including performing the model selection process as an example, the request message is used to request that a target model selected through the model selection process is allowed to be used. Taking the model management including performing the model switching process as an example, the request message is used to request that a target model switched to through the model switching process is allowed to be used.

In operation S940, the network device transmits a response message of the request message to the terminal device. The response message indicates whether or not the model management result of the model management is allowed. For example, if the response message is ACK, it indicates that the model management result of the model management is allowed. If the response message is NACK, it indicates that the model management result of the model management is not allowed.

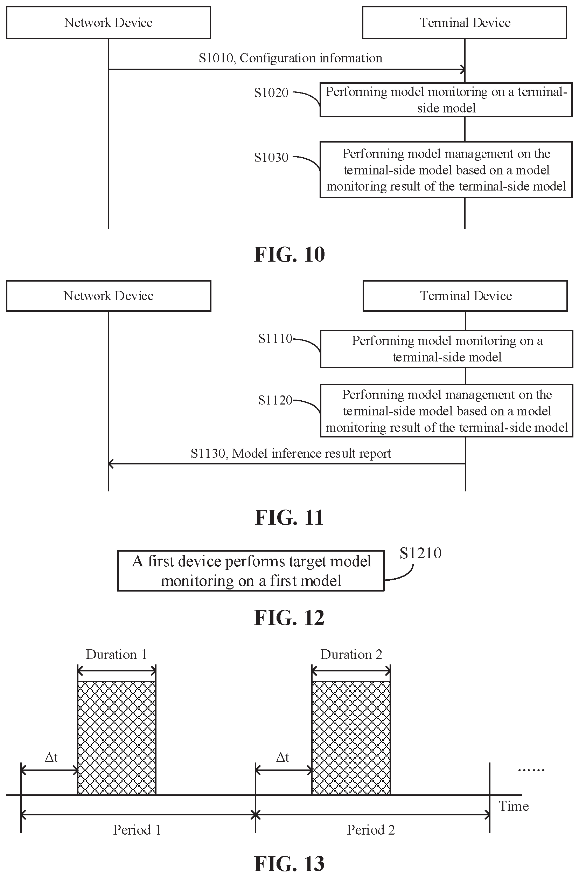

FIG. 10 is a flowchart of a method of model monitoring triggered by an event applicable to an embodiment of the present application. Assuming that a model for which the model monitoring is to be performed is a network-side model, the method illustrated in FIG. 10 includes operations S1010 to S1030.

In operation S1010, a network device transmits configuration information for configuring an event for triggering model management to a terminal device.

In some implementations, the model management includes one of: controlling the network-side model to be in an active state; controlling the network-side model to be in an inactive state; controlling the network-side model to perform model fallback; performing a model selection process; or performing a model switching process.

In operation S1020, the terminal device triggers the model monitoring of the terminal-side model.

In operation S1030, the terminal device performs the model management on the terminal-side model based on a model monitoring result of the terminal-side model.

In some scenarios, a device performing model monitoring may indicate performance of the model and/or model management results by transmitting a model inference result report. FIG. 11 is a flowchart of a method of performing model monitoring on a terminal-side model applicable to an embodiment of the present application. The method illustrated in FIG. 11 includes operations S1110 to S1130.

In operation S1110, a terminal device triggers model monitoring of a terminal-side model.

In operation S1120, the terminal device performs model management on the terminal-side model based on a model monitoring result of the terminal-side model.

In some implementations, the model management includes one or more of: controlling a network-side model to be in an active state; controlling the network-side model to be in an inactive state; controlling the network-side model to perform model fallback; performing a model selection process; or performing a model switching process.

In operation S1130, the terminal device transmits a model inference result report to the network device.

In some implementations, performing the model monitoring on the model can obtain model monitoring information (also called a model monitoring result). Generally, the model monitoring information can be divided into two major categories. The first type of model monitors information is information related to a wireless communication system, for example, throughput, bit error rate, etc. The second type of model monitoring information is information related to model performance, for example, data offset, confidence level, confidence probability, etc.

In other implementations, the model monitoring may be performed based on a model identifier of the model. For example, the model monitored by the model monitoring is determined based on the model identifier.

With wide application of models in communication system, performances of models affect communication quality of communication system. For a model with better performance, communication based on this model can greatly improve the communication quality. For a model with poor performance, communication based on this model may lead to degradation of the communication quality and even communication failure. Therefore, it is very important to monitor the model performance. At present, a scheme of continuous model monitoring of model performance is mainly used for model monitoring, which may lead to an unreasonable implementation of model monitoring in an actual process.

For example, if the communication quality of communication based on the first model is relatively stable, it is unnecessary for the first device to continuously monitor the first model, which may increase the power consumption of the first device.

For another example, in order to save power consumption of the first device, the first device may periodically enter a silent period of radio resource management (RRM) measurement, and the first device does not perform RRM measurement during the silent period, and the RRM measurement is the basis of model monitoring, that is, the model monitoring needs to be performed based on the result of the RRM measurement. If the first device enters a silent period of the RRM measurement, continuous model monitoring cannot be performed on the model. If the first device still performs the RRM measurement after entering the silent period of the RRM measurement, the power consumption of the first device will be significantly increased.

Therefore, in view of the above problems, an embodiment of the present application provides a method of model monitoring. In this method, a target model monitoring is introduced to monitor a model (also called a first model), which is helpful to improve the rationality of the model monitoring performed in the actual process.

In the embodiment of the present application, the first model is not limited. In some implementations, the first model may be an AI model. For example, the first model may be any of the AI models described above, or may be a new AI model introduced in the future. In other implementations, the first model may be a machine learning (ML) model.

Hereinafter, a method of model monitoring according to an embodiment of the present application will be described with reference to FIG. 12. The method shown in FIG. 12 includes operation S1210. In operation S1210, a first device performs target model monitoring on a first model.

In some implementations, the target model monitoring may include a discontinuous model monitoring mode. Discontinuous may be understood as discontinuous monitoring in time, that is, the target model monitoring may include model monitoring of discontinuous monitoring in time. For example, the target model monitoring may include model monitoring based on a period. For another example, the target model monitoring may include model monitoring triggered based on an event. For another example, the target model monitoring may include model monitoring triggered based on an indication from a second device.

In the embodiments of the present application, the introduction of the discontinuous model monitoring mode is helpful to reduce the power consumption required for model monitoring compared with the continuous model monitoring mode. Taking a cell handover scenario as an example, a terminal device can determine whether the model-based communication mode is improved compared to the traditional communication mode (that is, it is not the model-based communication mode) after the handover. At this time, if the continuous model monitoring mode is adopted, the terminal device needs to continuously perform model monitoring for a period of time after the handover. For example, the terminal device continuously measures signals during this period of time, which means that the terminal device needs to continuously measure a reference signal receiving power (RSRP) of a cell determined based on the traditional communication mode in addition to monitoring the RSRP of the current serving cell, resulting in a high power consumption. If the discontinuous model monitoring mode is adopted, the terminal device only needs to perform discontinuous model monitoring. For example, the terminal device makes discontinuous measurements during this period of time, therefore the power consumption of the terminal device is reduced.

In other implementations, the above discontinuity may be understood as a discontinuous measurement in time, that is, the target model monitoring may include a model monitoring of a discontinuous measurement in time, or the measurement of the signal is discontinuous during the model monitoring period. For example, the target model monitoring may include model monitoring based on prediction data. In such a model monitoring scheme, the first device may not perform RRM measurement for a period of time, but may perform model monitoring based on prediction data. At this time, the RRM measurement may be performed discontinuously while implementing continuous model monitoring.

In the embodiments of the present application, the model monitoring mode in which discontinuous measurement is performed is introduced, which is helpful to reduce the power consumption required for model monitoring compared to the model monitoring mode in which continuous measurement is performed. Taking the terminal device adopting the RRM measurement silence mechanism as an example, the terminal device usually does not measure signals during the silent period of RRM measurement to reduce the power consumption of the terminal device. In this scenario, if the terminal device adopts the continuous model monitoring mode, it is contrary to the original design intention of the RRM measurement silence mechanism, making the introduction of the RRM measurement silence mechanism meaningless. If the discontinuous measurement model monitoring mode described above is adopted, the terminal device can predict the model performance in the silent period based on the prediction data. Since the prediction data is obtained by performing prediction based on the measurement data, at this time, the terminal device does not need to perform RRM measurement in the silent period, which is matched with the RRM measurement silence mechanism, and reduces the power consumption of the terminal device.

In order to facilitate understanding, the implementations of target model monitoring in the embodiments of the present application will be described below in conjunction with embodiments 1 to 4, respectively. It should be noted that the embodiments of the present application are not limited to the several model monitoring methods described below, and the target model monitoring methods of the embodiments of the present application may also include other discontinuous measurement model monitoring methods and/or discontinuous monitoring model monitoring methods.

### Embodiment 1: model monitoring based on a period.

In some implementations, the model monitoring based on the period described above may be understood as model monitoring performed periodically. Therefore, this period can also be referred to as the model monitoring interval period.

In some implementations, the model monitoring based on the period described above may be performed based on a target parameter, herein the target parameters include a first parameter and/or a second parameter.

**Taking the target parameter including the first parameter as an example,** the first parameter is used to determine a time length of the period, or the first parameter is used to determine a duration of the period. Hereinafter, the first parameter according to the embodiment of the present application is described in conjunction with Example 1 and Example 2.

In Example 1, the first parameter indicates a first time interval between two adjacent periods. The two adjacent periods may refer to two periods that are adjacent in time.

In the embodiments of the present application, the method of determining the first time interval is not limited. In some implementations, the first time interval may be a time interval between start times of two adjacent periods. Referring to FIG. 13, two adjacent periods may include period 1 and period 2, and the first time interval may be a time interval between the start time of period 1 and the start time of period 2. In other implementations, the first time interval may be a time interval between end times of two adjacent periods. Referring to FIG. 13, adjacent two periods may include period 1 and period 2, and the first time interval may be a time interval between the end time of period 1 and the end time of period 2. Or, in the embodiments of the present application, the first time interval may also be a time interval between intermediate times of two adjacent periods.

In the embodiments of the present application, the first time interval may belong to a time interval set, and the time interval set may include one or more candidate values of the first time interval. At this time, a suitable candidate value may be selected from the time interval set as the first time interval. Taking the network device maintaining the time interval set as an example, the network device may select an appropriate candidate value from the time interval set as the first time interval, and transmit it to the terminal device (as an example of the first device).

In some scenarios, the network device may configure the first time intervals for a plurality of first devices (e.g., terminal devices), and the first time intervals configured for the plurality of terminal devices may all be from the time interval set. Alternatively, a portion of the first time intervals configured for the plurality of terminal devices may be from the time interval set. Or, in the embodiments of the present application, the first time intervals configured for the plurality of terminal devices may be directly determined by the network device, and may not be selected from the time interval set.

In the embodiments of the present application, the representation form of the time interval set is not limited. For example, the time interval set may be represented in the form of a list. In addition, in the embodiments of the present application, the time interval set described above may be predefined and/or preconfigured.

Assume that the time interval set pre-stored by the second device is {20 ms, 40 ms, 60 ms}. At this time, the second device may indicate to the first device that the value of the first time interval is 40 ms.

In other implementations, the two adjacent periods (or two temporally adjacent periods) include a first period and a second period. The first time interval is a time interval between a first duration in which the model monitoring is executable in the first period and a first duration in which the model monitoring is executable in the second period. For convenience of description, hereinafter, the first duration in which the model monitoring is performed in the first period is referred to as "duration 1", and the first duration in which the model monitoring is performed in the second period is referred to as "duration 2".

It should be noted that the first duration is a period in which model monitoring can be performed, that is, model monitoring can be performed within the first duration. However, a duration of performing the model monitoring may occupy only a portion of the first duration. For example, the time length of the first duration is 10 ms, and accordingly, the time length of the model monitoring performed within the first duration may be 8 ms. Or, in the embodiments of the present application, the time length for performing the model monitoring may occupy the entire time length of the first duration. For example, the time length of the first duration is 10 ms, and accordingly, the time length of the model monitoring performed within the first duration may be 10 ms.

In the embodiments of the present application, the method of determining the time length of the first duration is not limited. In some implementations, the time length of the first duration may be determined based on a length of a time required for the first model to perform the model inference process. For example, the time length of the first duration may be greater than or equal to the length of the time required for the first model to perform the model inference process. In other implementations, the time length of the first duration may be determined based on the length of the preparation time required for the first model to be ready to enter the model inference process. For example, the time length of the first duration may be greater than or equal to the length of the preparation time required for the first model to be ready to enter the model inference process.

In the embodiments of the present application, the method of determining the first time interval is not limited. In some implementations, the first time interval may be a time interval between a start time of duration 1 and a start time of duration 2. Referring to FIG. 13, two adjacent periods may include period 1 and period 2, the duration in which the model monitoring is performed in period 1 is duration 1, and the duration in which the model monitoring is performed in period 2 is duration 2. At this time, the first time interval may be a time interval between the start time of the duration 1 and the start time of the duration 2.

In other implementations, the first time interval may be a time interval between an end time of duration 1 and an end time of duration 2. With continued reference to FIG. 13, the first time interval may be a time interval between an end time of duration 1 and an end time of duration 2. Or, in the embodiments of the present application, the first time interval may also be a time interval between an intermediate time of the duration 1 and an intermediate time of the duration 2.

In the embodiments of the present application, the above-described first time interval may belong to a time interval set. The time interval set may include one or more candidate values of the first time interval. At this time, a suitable candidate value may be selected from the time interval set as the first time interval. Taking the network device maintaining time interval set as an example, the network device may select an appropriate candidate value from the time interval set as the first time interval and transmit it to the first device (as an example of the first device).

In some scenarios, the network device may configure first time intervals for a plurality of first devices (e.g., terminal devices), and the first time intervals configured for the plurality of terminal devices may all be from a time interval set. Alternatively, a portion of the first time intervals configured for the plurality of terminal devices may be from the time interval set. Or, in the embodiments of the present application, the first time intervals configured for the plurality of terminal devices may be directly determined by the network device, and may not be selected from the time interval set.

In the embodiments of the present application, the representation form of the time interval set is not limited. For example, the time interval set may be represented in the form of a list. In addition, in the embodiments of the present application, the time interval set described above may be predefined and/or preconfigured.

It is assumed that the time interval set pre-stored by the second device is {20 ms, 40 ms, 60 ms}, at this time, the second device may indicate to the first device that the value of the first time interval is 60 ms.

In Example 2, the first parameter indicates a base time interval, and the base time interval is used to determine the first time interval.

In the embodiments of the present application, the method of determining the first time interval is not limited. For example, the first time interval may be an integer multiple of the base time interval, or the first time interval may be N times of the base time interval, where N is a positive integer. For another example, the first time interval may be obtained by adjusting (e.g., increasing or decreasing) a time offset value with the base time interval as an initial value.

In the embodiments of the present application, the parameter N described above may belong to a parameter set. The parameter set may include one or more candidate values of the parameter N. At this time, a suitable candidate value may be selected from the parameter set as the parameter N to determine the first time interval. Taking the network device maintaining the parameter set as an example, the network device may select an appropriate candidate value as the parameter N from the parameter set, and transmit it to the first device, so that the first device determines the first time interval based on the parameter N and the base time interval.

In some scenarios, the network device may configure parameters N for a plurality of first devices (e.g., terminal devices), and the parameters N configured for the plurality of terminal devices may all be from a parameter set. Alternatively, some parameters N among the parameters N configured for the plurality of terminal devices may be from the parameter set. Or, in the embodiments of the present application, the parameters N configured for the plurality of terminal devices may be directly determined by the network device, and may not be selected from the parameter set.

In the embodiments of the present application, the representation form of the parameter set is not limited. For example, the parameter set may be represented in the form of a list. In addition, in the embodiments of the present application, the parameter set described above may be predefined and/or preconfigured. In addition, in the embodiments of the present application, the above-described base time interval may be determined by one or more of the following methods: a predefined method, a preconfigured method, or a network device configuration method.

Assuming that the base time interval 1 is 10 ms, the parameter set pre-stored by the second device is {1, 2,... 31}. At this time, the second device may indicate to the first device that the value of the parameter N is 2, and accordingly, the first device may determine that the value of the first time interval T is T = 2 × N = 20 ms based on the parameter N and the base time interval.

**Taking the target parameter including the second parameter as an example,** in some implementations, the second parameter is used to determine the first duration. The first duration can refer to the above introduction, and will not be repeated here for the sake of brevity.

In some implementations, the second parameter indicates a time length of the first duration, and/or a start time of the first duration. Or, in the embodiments of the present application, the second parameter may be used to indicate other parameters used for determining the first duration, for example, the second parameter may be used to indicate an end time of the first duration.

It is assumed that the second parameter indicates that the time length of the first duration is time length 1, the start time of the first duration is time 1, and the first duration is a period of time lasting for time length 1 with time 1 as the start time.

It is assumed that the second parameter indicates that the time length of the first duration is time length 2, the end time of the first duration is time 1, and the first duration is a period of time lasting for time length 2 with time 1 as the end time.

It should be noted that, as described above, the time length of the first duration may be indicated by the second parameter. Or, in the embodiments of the present application, the time length of the first duration may also be determined based on one or more of the following methods: a predefined method; a preconfigured method; or a network device configuration method.

In some implementations, if the second parameter indicates the start time of the first duration, the second parameter includes a time offset between the start time of the first duration and a start time of a period to which the first duration belongs. That is, the start time of the first duration is a time starting from the start time of the period, offset by the time offset. This method of setting the first duration improves the flexibility of the first duration.

Referring to FIG. 13, assuming that the time offset included in the second parameter is Δt, for period 1, the start time of period 1 serves as the initial position, the time offset by the time offset Δt from the initial position represents the start time of duration 1.

In some implementations, the time offset described above may be determined based on an inference response time of the first model. The time offset may be greater than or equal to the inference response time of the first model. Herein, the inference response time indicates a response time required for the first model to enter the inference process in response to the input data. This way of setting the time offset value reserves sufficient time for the first model to enter the model inference stage, so that when the first duration arrives, model monitoring can be performed on the first model for the first duration.

OR, in the embodiments of the present application, the start time of the first duration may overlap with the start time of the period, or the start time of the first duration may be the same as the start time of the period. That is, the time offset value may be 0, or the second parameter may no longer indicate the time offset value.

In addition, in the embodiments of the present application, the time domain position of the first duration in the period is not limited. For example, the end time of the first duration may be the end time of the period. For another example, the first duration may overlap with the period, that is, the start time of the first duration may be the start time of the period, and the end time of the first duration may be the end time of the period. At this time, the meaning of the period is similar to the first duration, i.e. the entire time within the period may be used to perform model monitoring, or in this case the first duration may not be additionally introduced.

In the embodiments of the present application, the second parameter may include one or more time offset values. If the time offset value included in the second parameter is one, the corresponding period may include only one first duration. If the second parameter includes a plurality of time offset values, the corresponding period may include a plurality of first durations.

For example, if the time length of the period is 60 ms, the time length of the first duration is 5 ms, the start time of the first duration is the same as the start time of the period, and the time offset included in the second parameter is {10 ms, 40 ms}, then two first durations of 10 ms to 15 ms and 40 ms to 45 ms may be included in one period, and model monitoring of 10 ms may be performed in these two durations, respectively.

In the embodiments of the present application, the method of determining the first duration is not limited. In some implementations, the second parameter may be used to indicate a time interval between a plurality of first durations included within a period, and the number of first durations within the period. For example, assuming that the time length of the period is 60 ms, the time length of the first duration is 5 ms, the start time of the first duration is the same as the start time of the period, the time interval between the plurality of first durations included in the second parameter is 10 ms, and the second parameter indicates that the number of first durations included in one period is 2, two first durations may be included in one period: 0 ms to 5 ms and 15 ms to 20 ms.

In some implementations, the first device may include a plurality of models, and the plurality of models may include the first model. At this time, the target parameters associated with some or all of the plurality of models may be different, that is, the periods for model monitoring associated with some or all of the plurality of models may be different, which contributes to improving the rationality of model monitoring performed for different models. Or, in the embodiments of the present application, the target parameters associated with the plurality of models may be the same, that is, the periods for model monitoring associated with the plurality of models may be the same, so as to reduce the complexity of performing model monitoring on the plurality of models.

In the embodiments of the present application, the correlation relationship between the model and the target parameter is not limited. In some implementations, models for different functions may be associated with different target parameters. For example, model 1 is used for CSI encoding and model 2 is used for beam management, and at this time, model 1 and model 2 may be associated with different target parameters. In other implementations, models for the same function may be associated with the same target parameters. For example, both model 1 and model 2 are used for beam management, and at this time, model 1 and model 2 may be associated with the same target parameters. In other implementations, models for different functions may be associated with the same target parameters. For example, model 1 is used for CSI encoding and model 2 is used for beam management, and at this time, model 1 and model 2 may be associated with the same target parameters. For another example, different target parameters may be associated with models for the same function. For example, both model 1 and model 2 are used for beam management, and at this time, model 1 and model 2 may be associated with different target parameters.

In some implementations, the first device may request the second device to adjust the target parameters of the first model, which improves the rationality of the target parameters. That is, the method further includes the following operations: the first device transmits a first request to the second device, herein the first request is used to request adjustment of target parameters associated with the first model; and the first device receives a response message transmitted by the second device for the first request.

In some implementations, the first request may include one or more of the following parameters: a model identifier of the first model; or information indicating that an adjustment is requested for a target parameter associated with the first model.

In some implementations, requirement information for the target model monitoring of the first model may be included in the first request so that the second device determines an adjusted target parameter based on the requirement information. For example, the requirement information may indicate an inference response time of the first model. The inference response time indicates a time required for the first model to enter the inference process in response to the input data. For another example, the requirement information may indicate an inference time of the first model. The inference time indicates a time required for the first model to perform the inference process. In the embodiments of the present application, the scheme of determining the first duration based on the inference response time and/or the inference time may refer to the above description of the first duration. For the sake of brevity, it will not be repeated here.

In other implementations, the first device may directly transmit the suggested candidate value of the target parameter to the second device so that the second device adjusts the target parameter based on the candidate value of the target parameter. That is, the first request may include a candidate value of the target parameter suggested by the first device.

In some implementations, the first request may include one or more of the following parameters: a model identifier of a first model; or information for candidate values of target parameters.

In the embodiments of the present application, the first request is not limited. Taking the first device as a UE as an example, the first request may be carried in UE assistance information (*UEAssistanceInformation*)*.*

In the embodiments of the present application, the first request may include one candidate value of the target parameter, which is helpful to reduce the overhead required for transmitting the first request. Or, in the embodiments of the present application, the first request may include a plurality of candidate values of the target parameter for selection by the second device, which is helpful to improve the rationality of the selection of the target parameter.

In some implementations, the candidate value in the first request may be generated by the first device. In the embodiments of the present application, the method in which the first device determines the candidate value is not limited. Taking the target parameter being a second parameter for determining the time length of the first duration as an example, in some implementations, the second parameter may be determined based on the length of time required for the first model to perform the model inference process. For example, the time length of the first duration indicated by the second parameter may be greater than or equal to the length of time required for the first model to perform the model inference process. In other implementations, the second parameter may be determined based on a length of a preparation time required for the first model to be ready to enter the model inference process. For example, the time length of the first duration indicated by the second parameter may be greater than or equal to the length of preparation time required for the first model to be ready to enter the model inference process. Taking the target parameter being the first parameter for determining the time length of the period as an example, in some implementations, the first parameter may be determined based on a length of a time required for the first model to perform the model inference process. For example, the time length of the period indicated by the first parameter may be greater than or equal to the length of time required for the first model to perform the model inference process. In other implementations, the first parameter may be determined based on the length of time required for the first model to be ready to enter the model inference process. For example, the time length of the period indicated by the first parameter may be greater than or equal to the length of time required for the first model to be ready to enter the model inference process.

In some implementations, the response message includes an adjusted target parameter. That is, the second device may indicate the adjusted target parameter to the first device through the response message.

In the embodiments of the present application, the manner in which the response message indicates the target parameter is not limited. The target parameter may be directly carried in the above-described response message. In other implementations, it is assumed that the first request carries candidate values of a plurality of target parameters, and accordingly, the response message may further indicate the target parameters by carrying an arrangement number of the candidate values in the first request. For example, the candidate values of the target parameter carried by the first request is {10 ms, 20 ms, 30 ms}, herein the arrangement number corresponding to the candidate value 10 ms is 1, the arrangement number corresponding to the candidate value 20 ms is 2, and the arrangement number corresponding to the candidate value 30ms is 3. At this time, the response message may carry the arrangement number 2 to indicate that the target parameter is 20 ms, or the response message may carry the arrangement number 1 to indicate that the target parameter is 10 ms, or the response message may carry the arrangement number 3 to indicate that the target parameter is 30 ms.

In other implementations, the response message may include information for indicating whether adjustment of the target parameter based on the first request is allowed. The embodiments of the present application do not limit the response message. For example, the response message may be an ACK/NACK, where the ACK indicates that adjustment of the target parameter based on the first request is allowed, and the NACK indicates that adjustment of the target parameter based on the first request is not allowed (or denied).

In the embodiments of the present application, any of the first requests described above may be used in conjunction with the response message. In some implementations, the first request may include candidate values of a target parameter, and accordingly, the response message may include information for indicating whether adjustment of the target parameters based on the first request is allowed.

For example, the target parameter includes the second parameter, and the value before adjustment of the second parameter is 10 ms. The first device transmits a first request to the second device, and the first request carries a candidate values of the second parameter being 20 ms. Accordingly, in response to receiving the first request, the second device transmits a response message to the first device, the response message indicates whether an adjustment of the second parameter based on the candidate value of the second parameter is allowed. If the response message indicates that the adjustment of the second parameter based on the candidate value of the second parameter is allowed, the value of the second parameter is adjusted to 20 ms. If the response message indicates that the adjustment of the second parameter based on the candidate value of the second parameter is not allowed, the value of the second parameter is a value before adjustment, that is, 10 ms.

Or, in the embodiments of the present application, the first request may include requirement information for target model monitoring of the first model, and accordingly, the response message may include a target parameter. Alternatively, the first request may include requirement information for target model monitoring of the first model, and a candidate value for the target parameter. Accordingly, the response message may include a target parameter and information for indicating whether adjustment of the target parameter based on the first request is allowed.

### Embodiment 2: Model monitoring triggered based on an event.

In some implementations, the target model monitoring is model monitoring triggered based on an event, and thus, the event used to trigger the model monitoring may also be referred to as a "triggering event".

In some implementations, the above event is associated with one or more of: a service type of a service to be transmitted; a model state of the first model; a device state of the first device; a wireless communication environment of the first device; or a model switching operation of switching to the first model being successful.

**Taking the event being associated with the service type of the service to be transmitted as an example,** in some implementations, the event may include that the service type of the service to be transmitted is changed. That is, if the service type of the service to be transmitted is changed, the target model monitoring may be triggered. Generally, if the service type is changed, input and output information of the first model may be affected, which may cause the model performance of the first model to degrade. At this time, performing target model monitoring is helpful to promptly discover the problem of mismatch between the first model and the service type. Or, in the embodiments of the present application, the event may further include that the service type of the service to be transmitted is a target service type, and the target service type may be, for example, a service type that does not match the first model in the historical communication process, and the specific form of the event is not limited in the embodiments of the present application.

For example, when the service type of the service to be transmitted in the first device is changed from a File Transfer Protocol (FTP) service type to a HyperText Transfer Protocol (HTTP) service type, the probability of packet loss occurring during the service data process increases, which leads to a situation where a large number of zeros or missing values are present in the data set (generally, sparsity is used to describe a situation where a large number of zeros or missing values are present in the data set). Therefore, when the service data is received based on the first model, it is required that the first model can make prediction based on the input information having high sparsity (that is, the above-described data set), and at this time, the model performance requirement of the first model is changed.

Accordingly, in the above scenario, if the service type of the service to be transmitted is changed from the FTP service type to the HTTP service type, that is, if an event occurs, the first device performs the target model monitoring on the first model.

For another example, when the service type of the service to be transmitted in the first device is the HTTP service type, that is, when an event occurs, the first device performs the target model monitoring on the first model.

Taking the event being associated with the model state of the first model as an example, in some implementations, the model state of the first model includes a transmission state of the first model. The transmission state indicates whether the first model is successfully transmitted.

Typically, the performance of the first model is not stable just after the first model is transmitted to the first device. Accordingly, the target model monitoring may be performed on the first model. That is, the event includes that the transmission state of the first model is transmission success, or that the event includes that transmission of the first model is completed.

In the embodiments of the present application, the transmission of the first model is not specifically limited. Taking the first device being a terminal device as an example, the transmission of the first model may include transmitting the first model from the network device to the terminal device. Herein the network device may be a core network device and/or an access network device. Details may be found from the description of the first device and the second device later.

In other implementations, if the model state of the first model includes an operating state of the first model, herein the operating state indicates whether the first model is activated. When the first model is activated, the operating state of the first model is the activated state. If the first model is not activated, the operating state of the first model is an inactivated state (also referred to as a "deactivated state"). Typically, the model in the activated state can perform a model inference process, while the model in the deactivated state cannot perform the model inference process.

Generally, the performance of the first model is not stable just after the first model is activated. Accordingly, the model monitoring may be performed on the first model by performing the above-described target model monitoring. That is, the event described above includes that the activation state of the first model is activation successful, or that the event described above includes that the first model is activated. In the embodiments of the present application, the specific contents of the above-described events are not limited. For example, the event described above may include that the operating state of the first model is transformed from a deactivated state to an activated state.

For example, if the first model transforms from a deactivated state to an activated state, i.e., an event occurs, then the first device performs the target model monitoring on the first model.

**In an example that the event is associated with the model switching operation of switching to the first model being successful,** in some implementations, if the first model switching is successful the operating state of the first model is an active state, and as described above, at this time, the performance of the first model is not stable. Accordingly, the target model monitoring may be performed on the first model. That is, the event includes that the first model switching is successful, or the model switching operation of switching to the first model is successful.

For example, after the first device is switched from cell 1 to cell 2, it is necessary to switch from another model to the first model, and if the first model switching is successful, that is, an event occurs, the first device performs target model monitoring on the first model.

**The event is Associated with the device state of the first device,** in some implementations, the device state of the first device indicates a movement state of the first device. The movement state of the first device may be indicates one or more of: whether the first device is in a movement state; a moving speed of the first device; a change in the moving speed of the first device, and the like.

The embodiments of the present application do not limit the specific contents of the above-described events. In some implementations, the above-described event includes that the movement state of the first device is changed. For example, the event described above includes that the movement speed of the first device is changed. As an example, the moving speed is changed, which may include that the moving speed is changed from a high speed to a low speed, and/or that the moving speed is changed from a low speed to a high speed. As another example, the event includes that the movement state of the first device is changed. As an example, the moving state is changed, which may include that the moving state is changed from a stationary state to a moving state, and/or the moving state is changed from the moving state to the stationary state.

For example, if the moving speed of the first device is changed from a low speed to a high speed, i.e., an event occurs, the first device performs the target model monitoring on the first model.

For another example, if the moving state of the first device is changed from the stationary state to the moving state, that is, an event occurs, the first device performs the target model monitoring on the first model.

In other implementations, the device state of the first device indicates a resource size of an available resource for the first device. In the embodiments of the present application, the available resources of the first device are not limited. In some implementations, the available resource of the first device may be an available resource associated with the operation of the first model, or the available resource of the first device may be a resource available for operating the first model. Or, in the embodiments of the present application, the available resource of the first device may also be remaining resources of the first device, part or all of the remaining resources may be used for the operation of the first model, or part or all of the remaining resources may be used for other operations other than the operation of the first model.

In the embodiments of the present application, the specific content of the available resource is not limited. For example, the available resource of the first device may include a computing resource of the first device. For another example, the available resource of the first device may include a storage resource of the first device. The storage resource may include an internal storage resource of the first device and/or an external storage resource of the first device. For another example, the available resource of the first device may include a power consumption resource of the first device. The power consumption resource may include an amount of electricity of the first device.

In the embodiments of the present application, the specific contents of the above-described events are not limited. In some implementations, the event described above may include that an amount of the resource available to the first device is changed. For example, the amount of the resource available to the first device is reduced. For another example, the amount of the resource available to the first device is reduced below a threshold 1. For another example, the amount of decrease in the amount of the resource available to the first device is greater than the threshold 2. The threshold 1 and/or the threshold 2 may be determined based on one or more of: predefined information, preconfigured information, or configuration information from the network device.

For example, the computing resources of the first device are reduced from a resource amount 1 to a resource amount 2, and a decrease amount Δ between the resource amount 1 and the resource amount 2 is greater than the threshold 2, that is, an event occurs, the first device performs the target model monitoring on the first model.

For another example, the storage resource of the first device is reduced from the resource amount 1 to the resource amount 2, and the resource amount 2 is less than the threshold 1, that is, an event occurs, the first device performs the target model monitoring on the first model.

**Taking the event being associated with the wireless communication environment of the first device as an example,** in some implementations, the wireless environment of the first device includes a wireless communication area of the first device. For example, the wireless communication area may include one or more of the following: a cell, a RAN-based notification area (RNA), a tracking area (TA), an indoor wireless communication environment, an outdoor wireless communication environment, a hotspot coverage, or non-hotspot coverage.

In some implementations, if the wireless communication environment of the first device includes the wireless communication area of the first device, the event includes the communication area in which the first device is located is changed. In the case where the wireless communication area includes the cell, the event may include that the cell of the first device is changed, or the event may include that the serving cell of the first device has undergone cell handover. In the case where the wireless communication region includes the RNA, the event may include that the RNA of the first device is changed. In the case where the wireless communication area includes the TA, the event may include that the TA of the first device is changed, or the TA of the first device is updated. In the case where the wireless communication area includes an indoor wireless communication environment and an outdoor wireless communication environment, the event may include that the wireless communication environment of the first device is changed from the indoor wireless communication environment to the outdoor wireless communication environment, or the event may include that the wireless communication environment of the first device is changed from the outdoor wireless communication environment to the indoor wireless communication environment. In the case where the wireless communication area includes a hotspot coverage and a non-hotspot coverage, the event may include that the wireless communication environment of the first device is changed from the hotspot coverage to the non-hotspot coverage, or the event may include that the wireless communication environment of the first device is changed from the non-hotspot coverage to the hotspot coverage.

In other implementations, the wireless environment of the first device includes a wireless communication frequency band of the first device. The wireless communication frequency band may be understood as a frequency band used by the first device for wireless communication.

In other implementations, if the wireless communication environment of the first device includes the wireless communication frequency band of the first device, the event includes that the frequency band used by the first device is changed. For example, the event described above may include that the frequency band used by the first device is switched from frequency band 1 to frequency band 2. For another example, the wireless communication frequency band may include a Bandwidth Part (BWP), and accordingly, the event may include that the BWP of the first device has undergone a switch.

In other implementations, the wireless communication environment of the first device described above is associated with the event, which may include that the wireless communication environment type of the wireless communication environment of the first device is associated with the event. The wireless communication environment type may include a line-of-sight communication type and a non-line-of-sight communication type.

In some implementations, the event described above may include that the wireless communication type of the first device is changed. For example, the event described above includes that the wireless communication type of the first device is converted from the line-of-sight communication type to the non-line-of-sight communication type. For another example, the event includes that the wireless communication type of the first device is converted from the non-line-of-sight communication type to the line-of-sight communication type.

In the embodiments of the present application, the above-described different events may be used independently of each other or in combination with each other. Taking the event including that the transmission of the first model is successful and the service type of the service to be transmitted is changed as an example, if the transmission of the first model is successful and the service type of the service to be transmitted in the first device is changed, the first device may perform the target model monitoring on the first model.

In some scenarios, the events described above may be configured by the second device. That is, the method further includes an operation that the second device transmits first configuration information to the first device. The first configuration information configures an event for the first device.

In some implementations, the first configuration information may be further used to configure a duration of performing the target model monitoring process, or the first configuration information may further configure a duration of performing the target model monitoring on the first model. Alternatively, in the embodiments of the present application, the duration may also be predefined or preconfigured. Alternatively, the duration may be configured by information other than the first configuration information.

In some implementations, a start time of the duration of performing the target model monitoring may be determined based on the occurrence time of the event. For example, the start time of the duration of performing the target model monitoring may be the occurrence time of the event. For another example, the start time of the duration of performing the target model monitoring may a time starting from the occurrence time of the event, offset by a time offset value 1, the time offset value 1 may be predefined, preconfigured or configured by the network device.

In some implementations, the duration of performing the target model monitoring described above may be maintained by the timer 1, that is, the first device may perform the target model monitoring on the first model during the operation of the timer 1. In other implementations, the start condition of the timer 1 may include the occurrence of the events described above.

As described above, in some scenarios, it may be jointly determined whether or not to perform the target model monitoring based on a plurality of events, and at this time, the plurality of events may all be configured through the first configuration information. For example, the first configuration information may include information for configuring each of the plurality of events, and the plurality of pieces of information are transmitted simultaneously. That is, the first configuration information may include a plurality of pieces of information transmitted simultaneously to configure the plurality of events respectively. For another example, the first configuration information may include information for configuring each of the plurality of events and the plurality of pieces of information are transmitted independently. That is, the first configuration information may include a plurality of pieces of information that are separately transmitted to configure the plurality of events respectively.

In the embodiments of the present application, the first configuration information is not limited. For example, the first configuration information may be a Radio Resource Control (RRC) message.

### Embodiment 3: Model monitoring based on prediction data

As described above, during the silent period of RRM measurement, the first device is usually in a silent state and does not perform the RRM measurement. RRM measurement is the basis for performing the model monitoring. If the first device does not perform the RRM measurement, the model monitoring cannot be performed, which may reduce the accuracy of the model monitoring. If the first device continues to measure during the silent period of the RRM measurement, the original intention of introducing the silent period will be violated, and the power consumption of the first device will be excessive.

Therefore, in view of the above problems, the embodiments of the present application propose model monitoring based on prediction data. In some implementations, the foregoing prediction data is used to perform target model monitoring on the first model during the silent period of the RRM measurement, so that the first device may not perform the RRM measurement during the silent period of the RRM measurement, helping to reduce power consumption of the first device. In addition, during the silent period of the RRM measurement, the first device can continuously monitor the first model based on the prediction data, which is helpful to realize the continuous monitoring of the first model and improve the accuracy of the model monitoring.

In some implementations, the prediction data is obtained by performing prediction based on measurement data acquired from the RRM measurement performed by the first device during a non-silent period. Assuming that the measurement data is obtained based on the RRM measurement in a first time period, the first time period is a period before the silent period of the RRM measurement, and the first time period is temporally adjacent to the silent period of the RRM measurement, it is helpful to improve the accuracy of the prediction data. Or, in the embodiments of the present application, the first time period may not be adjacent to the silent period of the RRM measurement.

In the embodiments of the present application, the measurement data is not limited. In some implementations, the measurement data may be understood as a measurement result of the RRM measurement. For example, the measurement data may include an RSRP value. As another example, the measurement data may include a reference signal receiving quality (RSRQ) value. For another example, the measurement data may include a received signal strength indication (RSSI).

For example, in the RRM measurement, the first device measures for 5 seconds and then silences for 5 seconds, and so on. If the first device performs the RMM measurement within a period of 1 to 5 seconds, to acquire measurement data 1. Thereafter, a period of 6 to 10 seconds is a silent period, and the first device may obtain prediction data 1 based on the measurement data 1 to perform the target model monitoring on the first model. Herein, the prediction data 1 is a predicted RRM measurement result within 6 to 10 seconds. Thereafter, the first device may input the prediction data 1 into the first model to obtain the prediction data 2. The prediction data 2 is a predicted RRM measurement result within 11 to 15 seconds. Thereafter, the first device may continue to perform the RMM measurement within 11 to 15 seconds to acquire measurement data 2. At this time, the prediction data 2 may be compared with the measurement data 2 to determine the model monitoring result of the first model.

In some implementations, the second device may indicate to the first device whether to perform the model monitoring based on the prediction data. That is, the second device transmits first indication information to the first device. The first indication information may be indicates whether the first device performs the model monitoring based on the prediction data. Or, in the embodiments of the present application, the first device may determine whether or not to perform the model monitoring based on the prediction data through the predefined information and the preconfigured information. For example, in a case where the preconfigured information or the predefined information indicates that the first device does not perform the model monitoring based on the prediction data, if the first indication information is absence, the first device may determine not to perform the model monitoring based on the prediction data based on the preconfigured information or the predefined information. Conversely, if the first indication information indicates that the model monitoring based on the prediction data is performed, the first apparatus may determine, based on the first indication information, to perform the model monitoring based on the prediction data.

In the embodiments of the present application, the specific form of the first indication information is not limited. For example, the first indication information may occupy one bit, which reduces transmission resources for transmitting the first indication information. When a value of the bit is a first value, it may indicate that the first device performs the model monitoring based on the prediction data. When the value of the bit is a second value, it may indicate that the first device does not perform the model monitoring based on the prediction data. Herein the first value and the second value are two different values. For example, the value of the first value may be 0, and the value of the second value may be 1. For another example, the value of the first value may be 1, and the value of the second value may be 0. Or, in the embodiments of the present application, the first indication information may be transmitted through a plurality of bits.

### Embodiment 4: Model monitoring triggered based on an indication from a second device.

In some implementations, the second device may instruct the first device to perform target model monitoring on the first model by transmitting the first information to the first device. Therefore, the first information may also be referred to as a "model monitoring start instruction".

In the embodiments of the present application, the specific form of the first information is not limited. For example, the first information may occupy one bit, helping to reduce transmission resources for transmitting the first information. When the value of the bit is a first value, it may indicate that the first device performs the target model monitoring on the first model. When the value of the bit is a second value, it may be used to indicate that the first device does not perform the target model monitoring. Herein the first value and the second value are two different values. For example, a value of the first value may be 0, and a value of the second value may be 1. For another example, the value of the first value may be 1, and the value of the second value may be 0. Or, in the embodiments of the present application, the first information may also be transmitted through a plurality of bits.

Further, in the embodiments of the present application, in a scenario in which the first device does not perform the target model monitoring, the second device may not transmit the first indication information to the first device. In this way, if the first device does not receive the first information, the first device does not perform the target model monitoring.

In the embodiments of the present application, the condition under which the second device transmits the first information is not limited. In some implementations, the second device may determine, based on one or more events described above, whether to instruct the first device to perform the target model monitoring through the first information.

In some implementations, if the second device monitors that the wireless communication quality is changed, the second device may instruct the first device to perform the target model monitoring. For example, when the second device monitors that the wireless communication quality is less than a threshold 1, the second device may instruct the first device to perform the target model monitoring. In some implementations, if the second device detects that the wireless communication environment is changed, the second device may instruct the first device to perform the target model monitoring. For example, if the second device detects that the cell of the first device is changed, the second device may instruct the first device to perform the target model monitoring. In some implementations, when the second device detects that the service type of the service data transmitted by the first device is changed, the second device may instruct the first device to perform the target model monitoring. For example, when the second device monitors that the service type of the service data transmitted by the first device is changed from the FTP service to the HTTP service type, the second device may instruct the first device to perform the target model monitoring.

In some scenarios, in the process of performing the target model monitoring on the first model, the first device may monitor an abnormality of the first model, and at this time, if the first device immediately stops the first model and transmits information indicating that the first model is abnormal to the second device, the accuracy of model monitoring may be reduced. This is because, due to various reasons, the first model may have an abnormality in a very short time, and then return to the normal working state. Therefore, neither the operation of immediately stopping the first model nor the above-described information of immediately indicating that the first model is abnormal is necessary.

In view of the above problem, in the embodiments of the present application, a first timer is introduced so that the model monitoring on the first model may be performed continuously within a time length (also referred to as a second duration) corresponding to the first timer after it monitors that the first model is abnormal. Therefore, in the embodiments of the present application, the first timer is also referred to as a "model monitoring abnormality timer". As described above, the scheme of performing the model monitoring on the basis of the first timer when an abnormality occurs in the first model contributes to improving the accuracy of model monitoring as compared to the scheme of immediately deactivating the first model or immediately indicating the information of the abnormality of the first model described above.

That is, the target model monitoring is associated with the first timer, and the duration of monitoring the first model is determined based on the first timer, and the first timer indicates the second duration of model monitoring after a first moment, and the first moment is determined based on a moment at which the abnormality of the first model occurs.

In some implementations, the first moment is determined based on a moment at which an abnormality of the first model occurs, which may include that the first moment is a moment at which an abnormality of the first model occurs. Alternatively, the first moment is determined based on the moment at which the abnormality of the first model occurs, which may include that the first moment is a moment starting from the moment at which the abnormality of the first model occurs, offset by a time offset value, but this is not limited in the embodiments of the present application.

In some implementations, the start condition of the first timer may include that the abnormality of the first model occurs. In the embodiments of the present application, there is no limitation on the occurrence of an abnormality in the first model. In some implementations, the abnormality of the first model occurs, which may include that an abnormality in a model monitoring result of the first model occurs. For example, if the model monitoring result of the first model is RSRP = - 200 dBm, and the model monitoring result significantly deviates from the historical model monitoring result range [- 135 dBm, - 75 dBm] of the first model, it may be determined that the first model is abnormal. Alternatively, in the embodiments of the present application, the determination may be made based on other model index information described below, and the determination method is similar to the determination method based on the RSRP. For the sake of brevity, they will not be listed here.

In some implementations, the stopping condition of the first timer may include that the first model returns to normal, at this time, the first timer may be stopped. In the embodiments of the present application, the method of determining that the first model returns to normal is not limited. In some implementations, the first model returns to normal, which may include that a model monitoring result of the first model returns to normal. For example, if the model monitoring result of the first model is RSRP= -100 dBm, and the model monitoring result belongs to the historical model monitoring result range [-135 dBm, -75 dBm] of the first model, at this time, it may be determined that the first model has returned to normal.

In other implementations, the first model returns to normal, which may include that the model monitoring results of the first model returns to normal P consecutive times, herein P is a positive integer greater than or equal to 1. Taking P = 2 as an example, two consecutive model monitoring results are RSRP1 = -100 dBm and RSRP2 = -90 dBm. Both RSRP1 and RSRP2 belong to the historical model monitoring result range [-135 dBm, -75 dBm] of the first model, and at this time, it can be determined that the first model has returned to normal. In the embodiments of the present application, the above-described parameter P may be determined based on one or more of the following methods: predefined, preconfigured, or being configured by the network device.

In some implementations, if the first device is deployed with a plurality of models, the first timers associated with some or all of different models of the plurality of models are different. Or, in the embodiments of the present application, the first timers associated with different models among the plurality of models may be the same.

In the embodiments of the present application, the first timer may be used in combination with any one of the target model monitoring described above. Or, in the embodiments of the present application, the first timer may also be used in combination with traditional model monitoring. In order to facilitate understanding, the first timer combined with the model monitoring based on the period described in the first embodiment will be described below as an example.

In some scenarios, the end time of the first duration available for performing target model monitoring on the first model may be earlier than the end time of the second duration. That is, during the operation of the first timer, the first duration may end, and at this time, the first device may continue to perform the target model monitoring on the first model until the first timer times out or the first timer stops, which improves the accuracy of performing the model monitoring on the first model.

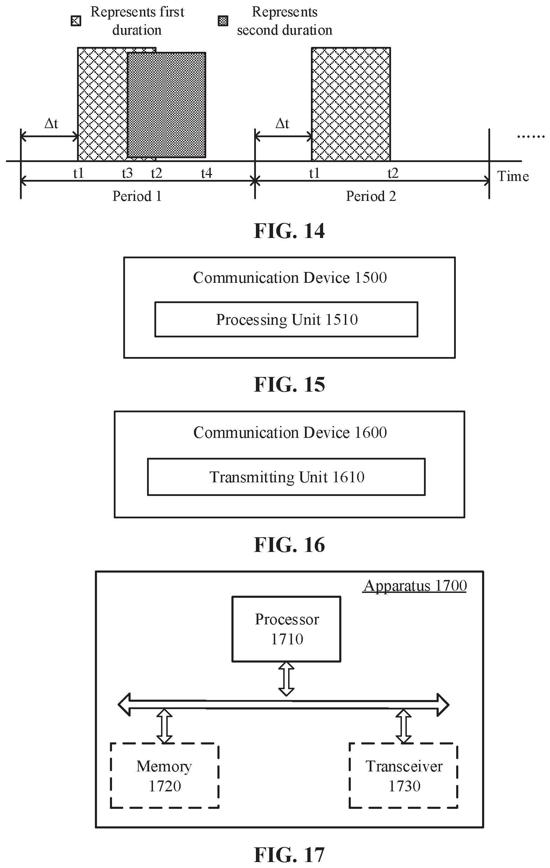

FIG. 14 shows a schematic diagram of combining the first timer and the model monitoring based on the period with each other in an embodiment of the present application. Referring to FIG. 14, in period 1, the first duration is a period of time from time t1 to time t2, and at this time, model monitoring may be performed on the first model within time t1 to time t2. It is assumed that, at a time t3 within the first duration, it monitors that the first model is abnormal, and a first timer is started. Herein the second duration indicated by the first timer is a period of time from the time t3 to the time t4. Herein the time t4 is after the time t2. Based on the first duration described above, it can be seen that the first device can only perform the model monitoring on the first model from time t1 to time t2, but due to an abnormality in the first model, at this time, the first device can continuously perform model monitoring on the first model from time t3 to time t4. That is, the first device can continuously perform the model monitoring on the first model from time t2 to time t4.

In some implementations, the first timer may be configured by the second device. That is, the method further includes an operation that the first device receives second configuration information transmitted by the second device. The second configuration information is used to configure the first timer. Alternatively, in the embodiments of the present application, the first timer may be predefined or preconfigured.

The target model monitoring according to the embodiments of the present application is described above with reference to FIGs. 1 to 14, and a model indicator monitored by the target model monitoring are described below.

In some implementations, information of the model indicator of the first model includes one or more of: model information of the first model, model call information of the first model, model performance statistics information of the first model, model stability information of the first model, model scoring information of the first model, model operation information of the first model, or model input data quality information of the first model.

Taking the model index information of the first model including the model information of the first model as an example, the model information of the first model is used to describe basic information of the first model. In some implementations, the model information of the first model indicates one or more of: a model ID of the first model, a model update time of the first model, a model version of the first model, a model size of the first model, a model history version of the first model, a model authorization entity of the first model, or an authorized manufacturer of the first model.

Taking the model index information of the first model including the model call information of the first model as an example, the model call information of the first model may include model call information of the first model. Herein the model call information of the first model may be used to indicate a situation in which the first model is called. In some implementations, the call information of the first model indicates one or more of: a number of calling the first model, a time of calling the first model, a frequency of calling the first model, or a number of deactivating the first model.

Taking the model index of the first model including the model performance statistic information of the first model as an example, the model performance statistic information of the first model is used for analyzing model inference performance of the first model. In some implementations, the model performance statistic information of the first model are used to indicate one or more of: a mean average precision, a maximum value of model inference results, a minimum value of the model inference results; a median value of the model inference results, quartiles of model inference results; accuracy of model inference, recall of model inference, precision of model inference or model drift information.

Taking the model index of the first model including the model stability information of the first model as an example, the model stability information of the first model is used to evaluate a deviation between multiple inference results of the first model. In some implementations, the model scoring information of the first model indicates one or more of: mean square error, root mean square error, mean absolute error, coefficient of determination (R2_score), confidence, model performance continuity information, or model performance substantial degradation information.

Taking the model index of the first model including the model scoring information of the first model as an example, the model scoring information of the first model is used to evaluate model performance of the first model when performing a certain task. Generally, the model scoring information is a comprehensive consideration of the model performance statistic information and the model stability information. Different models can be compared in a unified dimension through model scoring information. Exemplarily, the model scoring information may be a percentage-based score, for example, the model scoring information of the first model may be 95 points.

Taking the model index of the first model including the model operation information of the first model as an example, the model operation information of the first model includes device-level or resource-level information in the model inference process. For example, the model operation information of the first model may include one or more of the following: a model response speed of the first model, a number of response failures of the first model, or resource utilization of the first model. Herein, the resource may include a computing resource and/or a storage resource. Herein the computing resource may include, for example, a CPU resource and/or a GPU resource. The storage resource may include an internal storage resource and/or an external storage resource.

Taking the model index of the first model including model input data quality information of the first model as an example, the model input data quality information indicates the quality of the model input data. In some implementations, the model input data quality information may include one or more of the following: integrity of the model input data, sparsity of the model input data or measurement accuracy of the model input data.

In some implementations, the second device may indicate to the first device a model index of the first model monitored through the target model monitoring, which improves the rationality of the model monitoring. That is, the above method includes an operation that the second device transmits first information to the first device, herein the first information includes information indicating a model index of the first model monitored through the target model monitoring.

Alternatively, in the embodiments of the present application, the first information is used for performing the target model monitoring on the first model, and the first information may further include model information of the first model, and information for indicating whether or not to perform the target model monitoring.

In the embodiments of the present application, any of the above-mentioned information (e.g., first information, first request, first configuration information, second configuration information, etc.) may be carried through one or more of the following message types: a NR Positioning Protocol A (NRPPa) message, a long term evolution positioning protocol (LPP) Message, a non-access stratum (NAS) message, a radio resource control (RRC) message, a media access control control element (MAC CE), downlink control information (DCI), uplink control information (UCI), a physical uplink control channel (PUCCH), a physical uplink shared channel (PUSCH), an Inter-node message, an Xn interface message, an F1 interface message, an E1 interface message, an NG interface message, a message of a core network based on service architecture, or an AI-specific message.

In the embodiments of the present application, any of the above-described information may be carried through one or more of a unicast message, a multicast message, and a broadcast message.

The above-mentioned unicast message can be understood as one-to-one transmission information, that is, a message transmitted from a transmitter to a receiver. At this time, a signal source transmits the unicast message through the unicast channel, and only the terminal device or network device to which the corresponding unicast resource is allocated can attempt to receive the unicast message. The unicast message can also be called dedicated signaling.

The multicast message can be understood as one-to-many transmission information, that is, a message transmitted from one transmitter to a plurality of receivers. At this time, a signal source transmits a multicast message through a multicast channel, and a terminal device or a network device that is within the multicast signal coverage and is a member of a group can attempt to receive the multicast message. When a terminal device or a network device joins a group, it will acquire resources related to the multicast channel.

The above broadcast message can be understood as a pair of arbitrarily transmitted information, that is, a message transmitted from one transmitter to any receiver. At this time, a signal source transmits a broadcast message through a broadcast channel, and any terminal device or network device within the coverage range of the broadcast signal can attempt to receive the broadcast message.

In the embodiments of the present application, the first device and/or the second device are not limited. For example, the first device is a terminal device, and the second device is a network device. For another example, the first device is a network device, and the second device is a terminal device. For another example, the first device is a first terminal device, and the second device is a second terminal device. For another example, the first device is a first network device, and the second device is a second network device.

The network device is an access network device or a core network device or an AI/ML model related information management device or an operation administration and maintenance (OAM) device. Exemplarily, the access network device is any one of a gNB, a centralized unit (CU), a distributed unit (DU), a centralized unit-control plane (CU-CP), and a centralized unit-user plane (CU-UP).

Exemplarily, the core network device is any one of: a location management function (LMF) network element, a network slice selection function (NSSF), an authentication server function (AUSF), a unified data management (UDM), an access and mobility management function (AMF), a session management function (SMF), a policy control function (PCF), a user plane function (UPF), a sensing function (SF), and a network data analysis function (NWDAF) network element.

Hereinafter, the embodiments of the methods of the present application are described in detail with reference to FIGs. 1 to 14, and embodiments of devices of the present application will be described in detail with reference to FIGs. 15 to 17. It should be understood that the description of the method embodiment and the description of the device embodiment correspond to each other, and therefore, the portions not described in detail can be referred to the foregoing method embodiments.

FIG. 15 is a schematic diagram of a communication device according to an embodiment of the present application. The communication device 1500 illustrated in FIG. 15 is a first device, and the communication device 1500 includes a processing unit 1510.

The processing unit 1510 is configured to perform target model monitoring on a first model, the target model monitoring includes one of: model monitoring based on a period; model monitoring triggered based on an event; model monitoring triggered based on an indication from a second device; or model monitoring based on prediction data, the prediction data is obtained by performing prediction based on measurement data.

In some implementations, the target model monitoring is the model monitoring based on the period, the model monitoring based on the period is performed based on a target parameter, the target parameter includes one or more of the following: a first parameter for determining a time length of the period; or a second parameter for determining a first duration in which the model monitoring is executable in the period.

In some implementations, the target parameter includes the first parameter, and the first parameter indicates a first time interval between two adjacent periods; or the first parameter indicates a base time interval used to determine the first time interval.

In some implementations, the first parameter indicates the first time interval, the two adjacent periods includes a first period and a second period, the first time interval is a time interval between a start time of a first duration in which the model monitoring is executable in the first period and a start time of a first duration in which the model monitoring is executable in the second period.

In some implementations, the first parameter indicates the base time interval, the first time interval is an integer multiple of the base time interval.

In some implementations, the first time interval is a time interval between start times of the two adjacent periods.

In some implementations, the target parameter includes the second parameter, and the second parameter indicates at least one of a time length of the first duration or a start time of the first duration.

In some implementations, the second parameter indicates the start time of the first duration, the second parameter includes a time offset between the start time of the first duration and a start time of the period to which the first duration belongs.

In some implementations, the first model is one of a plurality of models deployed in the first device, and target parameters associated with some or all of the plurality of models are different; or target parameters associated with different models of the plurality of models are the same.

In some implementations, the communication device further includes: a transmission unit, configured to transmit a first request to a second device, the first request is used for requesting adjustment of the target parameter associated with the first model; and a first receiving unit, configured to receive a response message for the first request transmitted by the second device, the response message includes at least one of an adjusted target parameter or information for indicating whether adjustment of the target parameter based on the first request is allowed.

In some implementations, the first request includes one or more of: requirement information for the target model monitoring of the first model; or a candidate value of the target parameter suggested by the first device, the candidate value of the target parameter is used to determine the adjusted target parameter.

In some implementations, the target model monitoring is the model monitoring triggered based on the event, the event is associated with one or more of: a service type of a service to be transmitted; a model state of the first model; a device state of the first device; a wireless communication environment of the first device; or a model switching operation of switching to the first model being successful.

In some implementations, the event is associated with the model state of the first model, when the model state of the first model includes a transmission state of the first model, the event includes that the transmission state of the first model is transmission success; when the model state of the first model includes an activation state of the first model, the event includes that the activation state of the first model is activation success.

In some implementations, the event is associated with the device state of the first device, when the device state of the first device indicates a movement state of the first device, the event includes that the movement state of the first device is changed; when the device state of the first device indicates a resource size of an available resource for the first device, the event includes that the resource size of the available resource for the first device is changed.

In some implementations, the event is associated with the wireless communication environment of the first device, when the wireless communication environment of the first device includes a wireless communication area of the first device, the event includes that the communication area in which the first device is located is changed; when the wireless communication environment of the first device includes a wireless communication frequency band of the first device, the event includes that the wireless communication frequency band used by the first device is changed; the event includes that a wireless communication type of the first device is changed, the wireless communication type is associated with the wireless communication environment of the first device, the wireless communication type includes a line-of-sight communication type and a non-line-of-sight communication type.

In some implementations, the event is associated with the service type of the service to be transmitted, the event includes that the service type of the service to be transmitted is changed.

In some implementations, the communication device further includes a second receiving unit configured to receive first configuration information transmitted by a second device, the first configuration information is used to configure the event for the first device.

In some implementations, the target model monitoring is the model monitoring based on the prediction data, the prediction data is used for performing the target model monitoring on the first model during a silent period of RRM measurements.

In some implementations, the measurement data is obtained based on a RRM measurement in a first period of time, the first period of time is a period of time preceding the silent period of the RRM measurement, the first period of time is temporally adjacent to the silent period of the RRM measurement.

In some implementations, the target model monitoring is associated with a first timer, a duration of monitoring the first model is determined based on the first timer, the first timer is used to indicate a second duration of model monitoring following a first moment, the first moment is determined based on a moment at which an abnormality is occurred in the first model.

In some implementations, the first model is one of a plurality of models deployed in the first device, first timers associated with some or all different models of the plurality of models are different; or first timers associated with different models of the plurality of models are the same.

In some implementations, the communication device further includes a third receiving unit configured to receive second configuration information transmitted by a second device, the second configuration information is used to configure the first timer.

In some implementations, the communication device further includes a fourth receiving unit configured to receive first information transmitted by a second device, the first information is used for performing the target model monitoring on the first model.

In some implementations, the first information includes one or more of the following: model information of the first model; model information of the first model; information for indicating whether the target model monitoring is performed; or information for indicating a model metric of the first model monitored through the target model monitoring.

In some implementations, the first information includes information for indicating the model metric of the first model, information of the model metric of the first model includes one or more of the following: model call information of the first model; model performance statistic information of the first model; model stability information of the first model; model scoring information of the first model; model operation information of the first model; or model input data quality information of the first model.

FIG. 16 is a schematic diagram of a communication device according to an embodiment of the present application. A communication device 1600 illustrated in FIG. 16 is a second device, and the communication device 1600 includes a transmission unit 1610.

The transmission unit 1610 is configured to transmit first information to a first device, the first information is used for performing target model monitoring on a first model, the target model monitoring includes one of the following: model monitoring based on a period; model monitoring triggered based on an event; model monitoring triggered based on an indication from the second device; or model monitoring based on prediction data, the prediction data is obtained by performing prediction based on measurement data.

In some implementations, the target model monitoring is the model monitoring based on the period, the model monitoring based on the period is performed based on a target parameter, the target parameter includes one or more of the following: a first parameter for determining a time length of the period; or a second parameter for determining a first duration in which the model monitoring is executable in the period.

In some implementations, the target parameter includes the first parameter, and the first parameter indicates a first time interval between two adjacent periods; or the first parameter indicates a base time interval used to determine the first time interval.

In some implementations, the first parameter indicates the first time interval, the two adjacent periods includes a first period and a second period, the first time interval is a time interval between a start time of a first duration in which the model monitoring is executable in the first period and a start time of a first duration in which the model monitoring is executable in the second period.

In some implementations, the first parameter indicates the base time interval, the first time interval is an integer multiple of the base time interval.

In some implementations, the first time interval is a time interval between start times of the two adjacent periods.

In some implementations, the target parameter includes the second parameter, and the second parameter indicates at least one of a time length of the first duration or a start time of the first duration.

In some implementations, the second parameter indicates the start time of the first duration, the second parameter includes a time offset between the start time of the first duration and a start time of the period to which the first duration belongs.

In some implementations, the first model is one of a plurality of models deployed in the first device, and target parameters associated with some or all of the plurality of models are different; or target parameters associated with different models of the plurality of models are the same.

In some implementations, the communication device further includes: a receiving unit configured to receive a first request transmitted by the first device, the first request is used for requesting adjustment of the target parameter associated with the first model; and the transmission unit is configured to transmit a response message for the first request to the first device, the response message includes at least one of an adjusted target parameter or information for indicating whether adjustment of the target parameter based on the first request is allowed.

In some implementations, the first request includes one or more of the following: requirement information for the target model monitoring of the first model; or a candidate value of the target parameter suggested by the first device, the candidate value of the target parameter is used to determine the adjusted target parameter.

In some implementations, the target model monitoring is the model monitoring triggered based on the event, the event is associated with one or more of: a service type of a service to be transmitted; a model state of the first model; a device state of the first device; a wireless communication environment of the first device; or a model switching operation of switching to the first model being successful.

In some implementations, the event is associated with the model state of the first model, when the model state of the first model includes a transmission state of the first model, the event includes that the transmission state of the first model is transmission success; when the model state of the first model includes an activation state of the first model, the event includes that the activation state of the first model is activation success.

In some implementations, the event is associated with the device state of the first device, when the device state of the first device indicates a movement state of the first device, the event includes that the movement state of the first device is changed; when the device state of the first device indicates a resource size of an available resource for the first device, the event includes that the resource size of the available resource for the first device is changed.

In some implementations, the event is associated with the wireless communication environment of the first device, when the wireless communication environment of the first device includes a wireless communication area of the first device, the event includes that the communication area in which the first device is located is changed; when the wireless communication environment of the first device includes a wireless communication frequency band of the first device, the event includes that the wireless communication frequency band used by the first device is changed; the event includes that a wireless communication type of the first device is changed, the wireless communication type is associated with the wireless communication environment of the first device, the wireless communication type includes a line-of-sight communication type and a non-line-of-sight communication type.

In some implementations, the event is associated with the service type of the service to be transmitted, the event includes that the service type of the service to be transmitted is changed.

In some implementations, the transmission unit is further configured to transmit first configuration information to the first device, the first configuration information is used to configure the event for the first device.

In some implementations, the target model monitoring is the model monitoring based on the prediction data, the prediction data is used for performing the target model monitoring on the first model during a silent period of a RRM measurement.

In some implementations, the measurement data is obtained based on a RRM measurement in a first period of time, the first period of time is a period of time preceding the silent period of the RRM measurement, the first period of time is temporally adjacent to the silent period of the RRM measurement.

In some implementations, the transmission unit is further configured to transmit second configuration information to the first device, the second configuration information is used to configure a first timer associated with the target model monitoring, the first timer is used to indicate a second duration of model monitoring following a first moment, the first moment is determined based on a moment at which an abnormality is occurred in the first model.

In some implementations, the first information includes one or more of: model information of the first model; information for indicating whether the target model monitoring is performed; or information for indicating a model metric of the first model monitored through the target model monitoring.

In some implementations, the first information includes information for indicating the model metric of the first model, information of the model metric of the first model comprising one or more of the following: model call information of the first model; model performance statistic information of the first model; model stability information of the first model; model scoring information of the first model; model operation information of the first model; or model input data quality information of the first model.

In an alternative embodiment, the processing unit 1510 may be a processor 1710. The communication device 1500 may also include a transceiver 1730 and a memory 1720, as specifically shown in FIG. 17.

In an alternative embodiment, the transmission unit 1610 may be a transceiver 1730. The communication device 1600 may also include a processor 1710 and a memory 1720, as specifically shown in FIG. 17.

FIG. 17 is a schematic structural diagram of a communication device according to an embodiment of the present application. The dashed line in FIG. 17 indicates that the unit or module is optional. The apparatus 1700 may be used to implement the methods described in the method embodiments described above. The apparatus 1700 may be a chip, a terminal device, or a network device.

The apparatus 1700 may include one or more processors 1717. The processor 1717 may support the apparatus 1700 to implement the methods described in the previous method embodiments. The processor 1717 may be a general-purpose processor or a special-purpose processor. For example, the processor may be a central processing unit (CPU). Alternatively, the processor may also be another general purpose processor, a digital signal processor (DSP), an application specific integrated circuit (ASIC), a field programmable gate array (FPGA) or other programmable logic device, a discrete gate or transistor logic device, a discrete hardware component, or the like. The general purpose processor may be a microprocessor or the processor may be any conventional processor or the like.

The apparatus 1700 may also include one or more memories 1720. The memory 1720 has stored a program that can be executed by the processor 1717 such that the processor 1717 performs the method described in the above method embodiments. The memory 1720 may be independent of the processor 1717 or may be integrated in the processor 1717.

The apparatus 1700 may also include a transceiver 1730. The processor 1717 may communicate with other devices or chips through the transceiver 1730. For example, the processor 1717 may transmit or receive data with other devices or chips through the transceiver 1730.

The embodiments of the present application also provide a computer-readable storage medium for storing a program. The computer-readable storage medium can be applied to the terminal device or the network device provided in the embodiments of the present application, and the program causes a computer to execute a method executed by the terminal device or the network device in the embodiments of the present application.

The embodiments of the present application also provide a computer program product. The computer program product includes a program. The computer program product can be applied to the terminal device or the network device provided in the embodiments of the present application, and the program causes a computer to execute a method executed by the terminal device or the network device in the embodiments of the present application.

The embodiments of the present application also provide a computer program. The computer program can be applied to the terminal device or the network device provided in the embodiments of the present application, and the computer program causes a computer to execute a method executed by the terminal device or the network device in the embodiments of the present application.

It is to be understood that the terms "system" and "network" may be used interchangeably in this application. In addition, the terminology used in the present application is for explanation of specific embodiments of the present application only, and is not intended to limit the present application. The terms "first", "second", "third" and "fourth" etc. in the specification and claims of the present application and the accompanying drawings are used to distinguish different objects, and are not used to describe a specific order. Furthermore, the terms "comprising" and "having" and any variations thereof are intended to cover non-exclusive inclusions.

In the embodiments of the present application, the "indication" mentioned may be a direct indication, an indirect indication, or an associated relationship. For example, A indicates B, which may mean that A directly indicates B, for example, B can be acquired through A; or may also mean that A indicates B indirectly, for example A indicates C, and B can be acquired through C; or may also mean that there is an association relationship between A and B.

In the embodiments of the present application, "B corresponding to A" means that B is associated with A, and B can be determined from A. However, it should also be understood that determining B from A does not mean that B is determined from A alone, and that B may also be determined from A and/or other information.

In the embodiments of the present application, the term "correspondence" may indicate that there is a direct correspondence or indirect correspondence between the two, may indicate that there is a correlation relationship between the two, or may indicate a relationship between indicating and being indicated, configuring and being configured, or the like.

In the embodiments of the present application, "predefined" or "preconfigured" may be realized by storing corresponding codes, tables, or other methods that can be used to indicate relevant information in advance in a device (including, for example, a terminal device and a network device), and the present application does not limit specific implementation methods thereof. For example, predefined may refer to defined in the protocol.

In the embodiments of the present application, the "protocol" may refer to a standard protocol in the communication field, and may include, for example, an LTE protocol, an NR protocol, and related protocols applied to future communication systems, and the present application is not limited thereto.

The term "and/or" in the embodiment of the present application is only an association relationship describing association objects, and indicates that there may be three kinds of relationships, for example, A and/or B, which may indicate that A exists alone, both A and B exist, or B exists alone. In addition, the character "/" in this article generally indicates that the related objects before the character "/" and after the character "/" are in an "or" relationship.

In various embodiments of the present application, the size of the sequence number of the above-described processes does not mean the sequence of execution, and the sequence of execution of each process should be determined by its function and internal logic, and should not constitute any limitation on the implementation process of the embodiments of the present application.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between parts shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiments.

In addition, each functional unit in each embodiment of the present application may be integrated in one processing unit, each unit may be physically present alone, or two or more units may be integrated in one unit.

The embodiments described above may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions described in accordance with embodiments of the present application are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center by wired (e.g., coaxial cable, optical fiber, digital subscriber line (DSL)) or wireless (e.g., infrared, wireless, microwave, etc.) means to another website site, computer, server, or data center. The computer-readable storage medium may be any available medium that can be read by a computer or a data storage device including a server, a data center, or the like that integrated by one or more available media. The available media may be magnetic media (e.g., floppy disk, hard disk, magnetic tape), optical media (e.g., digital video disc (DVD)), or semiconductor media (e.g., solid state disk (SSD)), etc.

The above are merely specific embodiments of the present application, but the scope of the present application is not limited thereto, any changes or alternatives which can be obtained easily by any person skilled in the art within the technical scope disclosed in the present application should be covered within the scope of the present application. Therefore, the scope of the present application should be based on the scope of the claims.

## Claims

1. A method of model monitoring, comprising:
performing, by a first device, target model monitoring on a first model, the target model monitoring comprising one of the following:
model monitoring based on a period;
model monitoring triggered based on an event;
model monitoring triggered based on an indication from a second device; or
model monitoring based on prediction data, the prediction data being obtained by performing prediction based on measurement data.

2. The method of claim 1, wherein the target model monitoring is the model monitoring based on the period, the model monitoring based on the period is performed based on a target parameter, the target parameter comprises one or more of the following:
a first parameter for determining a time length of the period; or
a second parameter for determining a first duration in which the model monitoring is executable in the period.

3. The method of claim 2, wherein the target parameter comprises the first parameter, and the first parameter indicates a first time interval between two adjacent periods; or
the first parameter indicates a base time interval used to determine the first time interval.

4. The method of claim 3, wherein the first parameter indicates the first time interval, the two adjacent periods comprises a first period and a second period, the first time interval is a time interval between a start time of a first duration in which the model monitoring is executable in the first period and a start time of a first duration in which the model monitoring is executable in the second period.

5. The method of claim 4, wherein the first parameter indicates the base time interval, the first time interval is an integer multiple of the base time interval.

6. The method of any one of claims 3-5, wherein the first time interval is a time interval between start times of the two adjacent periods.

7. The method of any one of claims 2-6, wherein the target parameter comprises the second parameter, and the second parameter indicates at least one of a time length of the first duration or a start time of the first duration.

8. The method of claim 7, wherein the second parameter indicates the start time of the first duration, the second parameter comprises a time offset between the start time of the first duration and a start time of the period to which the first duration belongs.

9. The method of any one of claims 2-8, wherein the first model is one of a plurality of models deployed in the first device, and
target parameters associated with some or all of the plurality of models are different; or target parameters associated with different models of the plurality of models are the same.

10. The method of any one of claims 2-9, further comprising:
transmitting, by the first device, a first request to a second device, the first request being used for requesting adjustment of the target parameter associated with the first model; and
receiving, by the first device, a response message for the first request transmitted by the second device, the response message comprising at least one of an adjusted target parameter or information for indicating whether adjustment of the target parameter based on the first request is allowed.

11. The method of claim 10, wherein the first request comprises one or more of the following:
requirement information for the target model monitoring of the first model; or
a candidate value of the target parameter suggested by the first device, the candidate value of the target parameter is used to determine the adjusted target parameter.

12. The method of claim 1, wherein the target model monitoring is the model monitoring triggered based on the event, the event is associated with one or more of:
a service type of a service to be transmitted;
a model state of the first model;
a device state of the first device;
a wireless communication environment of the first device; or
a model switching operation of switching to the first model being successful.

13. The method of claim 12, wherein the event is associated with the model state of the first model,
when the model state of the first model comprises a transmission state of the first model, the event comprises that the transmission state of the first model is transmission success;
when the model state of the first model comprises an activation state of the first model, the event comprises that the activation state of the first model is activation success.

14. The method of claim 12 or 13, wherein the event is associated with the device state of the first device,
when the device state of the first device indicates a movement state of the first device, the event comprises that the movement state of the first device is changed;
when the device state of the first device indicates a resource size of an available resource for the first device, the event comprises that the resource size of the available resource for the first device is changed.

15. The method of any one of claims 12-14, wherein the event is associated with the wireless communication environment of the first device,
when the wireless communication environment of the first device comprises a wireless communication area of the first device, the event comprises that the communication area in which the first device is located is changed;
when the wireless communication environment of the first device comprises a wireless communication frequency band of the first device, the event comprises that the wireless communication frequency band used by the first device is changed;
the event comprises that a wireless communication type of the first device is changed, the wireless communication type is associated with the wireless communication environment of the first device, the wireless communication type comprises a line-of-sight communication type and a non-line-of-sight communication type.

16. The method of any one of claims 12-15, wherein the event is associated with the service type of the service to be transmitted, the event comprises that the service type of the service to be transmitted is changed.

17. The method of any one of claims 12-16, further comprising:
receiving, by the first device, first configuration information transmitted by a second device, the first configuration information being used to configure the event for the first device.

18. The method of claim 1, wherein the target model monitoring is the model monitoring based on the prediction data, the prediction data is used for performing the target model monitoring on the first model during a silent period of a Radio Resource Management (RRM) measurement.

19. The method of claim 18, wherein the measurement data is obtained based on a RRM measurement in a first period of time, the first period of time is a period of time preceding the silent period of the RRM measurement, the first period of time is temporally adjacent to the silent period of the RRM measurement.

20. The method of any one of claims 1-19, wherein the target model monitoring is associated with a first timer, a duration of monitoring the first model is determined based on the first timer, the first timer is used to indicate a second duration of model monitoring following a first moment, the first moment is determined based on a moment at which an abnormality is occurred in the first model.

21. The method of claim 20, wherein the first model is one of a plurality of models deployed in the first device,
first timers associated with some or all different models of the plurality of models are different; or first timers associated with different models of the plurality of models are the same.

22. The method of claim 20 or 21, further comprising:
receiving, by the first device, second configuration information transmitted by a second device, the second configuration information being used to configure the first timer.

23. The method of any one of claims 1-22, further comprising:
receiving, by the first device, first information transmitted by a second device, the first information being used for performing the target model monitoring on the first model.

24. The method of claim 23, wherein the first information comprises one or more of the following:
model information of the first model;
information for indicating whether the target model monitoring is performed; or
information for indicating a model metric of the first model monitored through the target model monitoring.

25. The method of claim 24, wherein the first information comprises information for indicating the model metric of the first model, information of the model metric of the first model comprising one or more of the following:
model information of the first model;
model call information of the first model;
model performance statistic information of the first model;
model stability information of the first model;
model scoring information of the first model;
model operation information of the first model; or
model input data quality information of the first model.

26. A method of model monitoring, comprising:
transmitting, by a second device, first information to a first device, the first information is used for performing target model monitoring on a first model, the target model monitoring comprising one of the following:
model monitoring based on a period;
model monitoring triggered based on an event;
model monitoring triggered based on an indication from the second device; or
model monitoring based on prediction data, the prediction data being obtained by performing prediction based on measurement data.

27. The method of claim 26, wherein the target model monitoring is the model monitoring based on the period, the model monitoring based on the period is performed based on a target parameter, the target parameter comprises one or more of the following:
a first parameter for determining a time length of the period; or
a second parameter for determining a first duration in which the model monitoring is executable in the period.

28. The method of claim 27, wherein the target parameter comprises the first parameter, and the first parameter indicates a first time interval between two adjacent periods; or
the first parameter indicates a base time interval used to determine the first time interval.

29. The method of claim 28, wherein the first parameter indicates the first time interval, the two adjacent periods comprises a first period and a second period, the first time interval is a time interval between a start time of a first duration in which the model monitoring is executable in the first period and a start time of a first duration in which the model monitoring is executable in the second period.

30. The method of claim 29, wherein the first parameter indicates the base time interval, the first time interval is an integer multiple of the base time interval.

31. The method of any one of claims 27-30, wherein the first time interval is a time interval between start times of the two adjacent periods.

32. The method of any one of claims 27-31, wherein the target parameter comprises the second parameter, and the second parameter indicates at least one of a time length of the first duration or a start time of the first duration.

33. The method of claim 32, wherein the second parameter indicates the start time of the first duration, the second parameter comprises a time offset between the start time of the first duration and a start time of the period to which the first duration belongs.

34. The method of any one of claims 27-33, wherein the first model is one of a plurality of models deployed in the first device, and
target parameters associated with some or all of the plurality of models are different; or target parameters associated with different models of the plurality of models are the same.

35. The method of any one of claims 27-34, further comprising:
receiving, by the second device, a first request transmitted by the first device, the first request being used for requesting adjustment of the target parameter associated with the first model; and
transmitting, by the second device, a response message for the first request to the first device, the response message comprising at least one of an adjusted target parameter or information for indicating whether adjustment of the target parameter based on the first request is allowed.

36. The method of claim 35, wherein the first request comprises one or more of the following:
requirement information for the target model monitoring of the first model; or
a candidate value of the target parameter suggested by the first device, the candidate value of the target parameter is used to determine the adjusted target parameter.

37. The method of claim 36, wherein the target model monitoring is the model monitoring triggered based on the event, the event is associated with one or more of:
a service type of a service to be transmitted;
a model state of the first model;
a device state of the first device;
a wireless communication environment of the first device; or
a model switching operation of switching to the first model being successful.

38. The method of claim 37, wherein the event is associated with the model state of the first model,
when the model state of the first model comprises a transmission state of the first model, the event comprises that the transmission state of the first model is transmission success;
when the model state of the first model comprises an activation state of the first model, the event comprises that the activation state of the first model is activation success.

39. The method of claim 37 or 38, wherein the event is associated with the device state of the first device,
when the device state of the first device indicates a movement state of the first device, the event comprises that the movement state of the first device is changed;
when the device state of the first device indicates a resource size of an available resource for the first device, the event comprises that the resource size of the available resource for the first device is changed.

40. The method of any one of claims 37-39, wherein the event is associated with the wireless communication environment of the first device,
when the wireless communication environment of the first device comprises a wireless communication area of the first device, the event comprises that the communication area in which the first device is located is changed;
when the wireless communication environment of the first device comprises a wireless communication frequency band of the first device, the event comprises that the wireless communication frequency band used by the first device is changed;
the event comprises that a wireless communication type of the first device is changed, the wireless communication type is associated with the wireless communication environment of the first device, the wireless communication type comprises a line-of-sight communication type and a non-line-of-sight communication type.

41. The method of any one of claims 37-40, wherein the event is associated with the service type of the service to be transmitted, the event comprises that the service type of the service to be transmitted is changed.

42. The method of any one of claims 37-41, further comprising:
transmitting, by the second device, first configuration information to the first device, the first configuration information being used to configure the event for the first device.

43. The method of claim 26, wherein the target model monitoring is the model monitoring based on the prediction data, the prediction data is used for performing the target model monitoring on the first model during a silent period of a Radio Resource Management (RRM) measurement.

44. The method of claim 43, wherein the measurement data is obtained based on a RRM measurement in a first period of time, the first period of time is a period of time preceding the silent period of the RRM measurement, the first period of time is temporally adjacent to the silent period of the RRM measurement.

45. The method of any one of claims 26-44, further comprising:
transmitting, by the second device, second configuration information to the first device, the second configuration information being used to configure a first timer associated with the target model monitoring, the first timer being used to indicate a second duration of model monitoring following a first moment, the first moment being determined based on a moment at which an abnormality is occurred in the first model.

46. The method of any one of claims 26-45, wherein the first information comprises one or more of the following:
model information of the first model;
information for indicating whether the target model monitoring is performed; or
information for indicating a model metric of the first model monitored through the target model monitoring.

47. The method of claim 46, wherein the first information comprises information for indicating the model metric of the first model, information of the model metric of the first model comprising one or more of the following:
model information of the first model;
model call information of the first model;
model performance statistic information of the first model;
model stability information of the first model;
model scoring information of the first model;
model operation information of the first model; or
model input data quality information of the first model.

48. A communication device, the communication device being a first device, comprising:
a processing unit, configured to perform target model monitoring on a first model, the target model monitoring comprising one of the following:
model monitoring based on a period;
model monitoring triggered based on an event;
model monitoring triggered based on an indication from a second device; or
model monitoring based on prediction data, the prediction data being obtained by performing prediction based on measurement data.

49. The communication device of claim 48, wherein the target model monitoring is the model monitoring based on the period, the model monitoring based on the period is performed based on a target parameter, the target parameter comprises one or more of the following:
a first parameter for determining a time length of the period; or
a second parameter for determining a first duration in which the model monitoring is executable in the period.

50. The communication device of claim 49, wherein the target parameter comprises the first parameter, and the first parameter indicates a first time interval between two adjacent periods; or
the first parameter indicates a base time interval used to determine the first time interval.

51. The communication device of claim 50, wherein the first parameter indicates the first time interval, the two adjacent periods comprises a first period and a second period, the first time interval is a time interval between a start time of a first duration in which the model monitoring is executable in the first period and a start time of a first duration in which the model monitoring is executable in the second period.

52. The communication device of claim 51, wherein the first parameter indicates the base time interval, the first time interval is an integer multiple of the base time interval.

53. The communication device of any one of claims 50-52, wherein the first time interval is a time interval between start times of the two adjacent periods.

54. The communication device of any one of claims 49-53, wherein the target parameter comprises the second parameter, and the second parameter indicates at least one of a time length of the first duration or a start time of the first duration.

55. The communication device of claim 54, wherein the second parameter indicates the start time of the first duration, the second parameter comprises a time offset between the start time of the first duration and a start time of the period to which the first duration belongs.

56. The communication device of any one of claims 49-55, wherein the first model is one of a plurality of models deployed in the first device, and
target parameters associated with some or all of the plurality of models are different; or target parameters associated with different models of the plurality of models are the same.

57. The communication device of any one of claims 49-56, further comprising:
a transmission unit, configured to transmit a first request to a second device, the first request being used for requesting adjustment of the target parameter associated with the first model; and
a first receiving unit, configured to receive a response message for the first request transmitted by the second device, the response message comprising at least one of an adjusted target parameter or information for indicating whether adjustment of the target parameter based on the first request is allowed.

58. The communication device of claim 57, wherein the first request comprises one or more of the following:
requirement information for the target model monitoring of the first model; or
a candidate value of the target parameter suggested by the first device, the candidate value of the target parameter is used to determine the adjusted target parameter.

59. The communication device of claim 48, wherein the target model monitoring is the model monitoring triggered based on the event, the event is associated with one or more of:
a service type of a service to be transmitted;
a model state of the first model;
a device state of the first device;
a wireless communication environment of the first device; or
a model switching operation of switching to the first model being successful.

60. The communication device of claim 59, wherein the event is associated with the model state of the first model,
when the model state of the first model comprises a transmission state of the first model, the event comprises that the transmission state of the first model is transmission success;
when the model state of the first model comprises an activation state of the first model, the event comprises that the activation state of the first model is activation success.

61. The communication device of claim 59 or 60, wherein the event is associated with the device state of the first device,
when the device state of the first device indicates a movement state of the first device, the event comprises that the movement state of the first device is changed;
when the device state of the first device indicates a resource size of an available resource for the first device, the event comprises that the resource size of the available resource for the first device is changed.

62. The communication device of any one of claims 59-61, wherein the event is associated with the wireless communication environment of the first device,
when the wireless communication environment of the first device comprises a wireless communication area of the first device, the event comprises that the communication area in which the first device is located is changed;
when the wireless communication environment of the first device comprises a wireless communication frequency band of the first device, the event comprises that the wireless communication frequency band used by the first device is changed;
the event comprises that a wireless communication type of the first device is changed, the wireless communication type is associated with the wireless communication environment of the first device, the wireless communication type comprises a line-of-sight communication type and a non-line-of-sight communication type.

63. The communication device of any one of claims 59-62, wherein the event is associated with the service type of the service to be transmitted, the event comprises that the service type of the service to be transmitted is changed.

64. The communication device of any one of claims 59-63, further comprising:
a second receiving unit configured to receive first configuration information transmitted by a second device, the first configuration information being used to configure the event for the first device.

65. The communication device of claim 48, wherein the target model monitoring is the model monitoring based on the prediction data, the prediction data is used for performing the target model monitoring on the first model during a silent period of a Radio Resource Management (RRM) measurement.

66. The communication device of claim 65, wherein the measurement data is obtained based on a RRM measurement in a first period of time, the first period of time is a period of time preceding the silent period of the RRM measurement, the first period of time is temporally adjacent to the silent period of the RRM measurement.

67. The communication device of any one of claims 48-66, wherein the target model monitoring is associated with a first timer, a duration of monitoring the first model is determined based on the first timer, the first timer is used to indicate a second duration of model monitoring following a first moment, the first moment is determined based on a moment at which an abnormality is occurred in the first model.

68. The communication device of claim 67, wherein the first model is one of a plurality of models deployed in the first device,
first timers associated with some or all different models of the plurality of models are different; or first timers associated with different models of the plurality of models are the same.

69. The communication device of claim 67 or 68, further comprising:
a third receiving unit configured to receive second configuration information transmitted by a second device, the second configuration information being used to configure the first timer.

70. The communication device of any one of claims 48-69, further comprising:
a fourth receiving unit configured to receive first information transmitted by a second device, the first information being used for performing the target model monitoring on the first model.

71. The communication device of claim 70, wherein the first information comprises one or more of the following:
model information of the first model;
information for indicating whether the target model monitoring is performed; or
information for indicating a model metric of the first model monitored through the target model monitoring.

72. The communication device of claim 71, wherein the first information comprises information for indicating the model metric of the first model, information of the model metric of the first model comprising one or more of the following:
model information of the first model;
model call information of the first model;
model performance statistic information of the first model;
model stability information of the first model;
model scoring information of the first model;
model operation information of the first model; or
model input data quality information of the first model.

73. A communication device, the communication device being a second device, comprising:
a transmission unit configured to transmit first information to a first device, the first information is used for performing target model monitoring on a first model, the target model monitoring comprising one of the following:
model monitoring based on a period;
model monitoring triggered based on an event;
model monitoring triggered based on an indication from the second device; or
model monitoring based on prediction data, the prediction data being obtained by performing prediction based on measurement data.

74. The communication device of claim 73, wherein the target model monitoring is the model monitoring based on the period, the model monitoring based on the period is performed based on a target parameter, the target parameter comprises one or more of the following:
a first parameter for determining a time length of the period; or
a second parameter for determining a first duration in which the model monitoring is executable in the period.

75. The communication device of claim 74, wherein the target parameter comprises the first parameter, and the first parameter indicates a first time interval between two adjacent periods; or
the first parameter indicates a base time interval used to determine the first time interval.

76. The communication device of claim 75, wherein the first parameter indicates the first time interval, the two adjacent periods comprises a first period and a second period, the first time interval is a time interval between a start time of a first duration in which the model monitoring is executable in the first period and a start time of a first duration in which the model monitoring is executable in the second period.

77. The communication device of claim 76, wherein the first parameter indicates the base time interval, the first time interval is an integer multiple of the base time interval.

78. The communication device of any one of claims 74-77, wherein the first time interval is a time interval between start times of the two adjacent periods.

79. The communication device of any one of claims 74-78, wherein the target parameter comprises the second parameter, and the second parameter indicates at least one of a time length of the first duration or a start time of the first duration.

80. The communication device of claim 79, wherein the second parameter indicates the start time of the first duration, the second parameter comprises a time offset between the start time of the first duration and a start time of the period to which the first duration belongs.

81. The communication device of any one of claims 74-80, wherein the first model is one of a plurality of models deployed in the first device, and
target parameters associated with some or all of the plurality of models are different; or target parameters associated with different models of the plurality of models are the same.

82. The communication device of any one of claims 74-81, further comprising:
a receiving unit, configured to receive a first request transmitted by the first device, the first request being used for requesting adjustment of the target parameter associated with the first model; and
the transmission unit is configured to transmit a response message for the first request to the first device, the response message comprising at least one of an adjusted target parameter or information for indicating whether adjustment of the target parameter based on the first request is allowed.

83. The communication device of claim 82, wherein the first request comprises one or more of the following:
requirement information for the target model monitoring of the first model; or
a candidate value of the target parameter suggested by the first device, the candidate value of the target parameter is used to determine the adjusted target parameter.

84. The communication device of claim 83, wherein the target model monitoring is the model monitoring triggered based on the event, the event is associated with one or more of:
a service type of a service to be transmitted;
a model state of the first model;
a device state of the first device;
a wireless communication environment of the first device; or
a model switching operation of switching to the first model being successful.

85. The communication device of claim 84, wherein the event is associated with the model state of the first model,
when the model state of the first model comprises a transmission state of the first model, the event comprises that the transmission state of the first model is transmission success;
when the model state of the first model comprises an activation state of the first model, the event comprises that the activation state of the first model is activation success.

86. The communication device of claim 84 or 85, wherein the event is associated with the device state of the first device,
when the device state of the first device indicates a movement state of the first device, the event comprises that the movement state of the first device is changed;
when the device state of the first device indicates a resource size of an available resource for the first device, the event comprises that the resource size of the available resource for the first device is changed.

87. The communication device of any one of claims 84-86, wherein the event is associated with the wireless communication environment of the first device,
when the wireless communication environment of the first device comprises a wireless communication area of the first device, the event comprises that the communication area in which the first device is located is changed;
when the wireless communication environment of the first device comprises a wireless communication frequency band of the first device, the event comprises that the wireless communication frequency band used by the first device is changed;
the event comprises that a wireless communication type of the first device is changed, the wireless communication type is associated with the wireless communication environment of the first device, the wireless communication type comprises a line-of-sight communication type and a non-line-of-sight communication type.

88. The communication device of any one of claims 84-87, wherein the event is associated with the service type of the service to be transmitted, the event comprises that the service type of the service to be transmitted is changed.

89. The communication device according to any one of claims 84-88, wherein the transmission unit is further configured to transmit first configuration information to the first device, the first configuration information being used to configure the event for the first device.

90. The communication device of claim 73, wherein the target model monitoring is the model monitoring based on the prediction data, the prediction data is used for performing the target model monitoring on the first model during a silent period of a Radio Resource Management (RRM) measurement.

91. The communication device of claim 90, wherein the measurement data is obtained based on a RRM measurement in a first period of time, the first period of time is a period of time preceding the silent period of the RRM measurement, the first period of time is temporally adjacent to the silent period of the RRM measurement.

92. The communication device of any one of claims 73-91, wherein the transmission unit is further configured to:
transmit second configuration information to the first device, the second configuration information being used to configure a first timer associated with the target model monitoring, the first timer being used to indicate a second duration of model monitoring following a first moment, the first moment being determined based on a moment at which an abnormality is occurred in the first model.

93. The communication device of any one of claims 73-92, wherein the first information comprises one or more of the following:
model information of the first model;
information for indicating whether the target model monitoring is performed; or
information for indicating a model metric of the first model monitored through the target model monitoring.

94. The communication device of claim 93, wherein the first information comprises information for indicating the model metric of the first model, information of the model metric of the first model comprising one or more of the following:
model information of the first model;
model call information of the first model;
model performance statistic information of the first model;
model stability information of the first model;
model scoring information of the first model;
model operation information of the first model; or
model input data quality information of the first model.

95. A communication device, comprising:
a transceiver;
a memory for storing a program; and
a processor configured to invoke the program in the memory and control the transceiver to receive or transmit signals to cause the terminal device to perform the method of any one of claims 1-47.

96. An apparatus, comprising a processor for invoking a program from a memory to cause the apparatus to perform a method as claimed in any one of claims 1-47.

97. A chip comprising a processor for invoking a program from a memory such that a device on which the chip is mounted performs a method of any one of claims 1-47.

98. A computer-readable storage medium having stored thereon a program that causes a computer to perform the method of any one of claims 1-47.

99. A computer program product comprising a program that causes a computer to perform the method of any one of claims 1-47.

100. A computer program causing a computer to perform the method of any one of claims 1-47.
